# NEW EUROPEAN PATENT SPECIFICATION

(11) **EP 2 902 817 B2**
(45) Date of publication and mention of the opposition decision: **27.09.2023**
(45) Mention of the grant of the patent: 18.11.2020
(21) Application number: 13840979.2
(22) Date of filing: 26.09.2013
(51) Int. Cl.: G02B 1/11, G02B 5/28, G02C 7/00, G02B 1/04, G02B 5/08, G02B 5/26, G02C 7/10, G02B 27/00

(54) **OPTICAL COMPONENT AND METHOD FOR PRODUCING SAME**
OPTISCHE KOMPONENTE UND VERFAHREN ZUR HERSTELLUNG DAVON
COMPOSANT OPTIQUE ET PROCÉDÉ POUR SA PRODUCTION

(30) Priority: 28.09.2012 JP 2012216234
(43) Date of publication of application: 05.08.2015
(73) Proprietor: Nikon-Essilor Co., Ltd., Tokyo 130-0026 (JP)
(72) Inventor: MIYAMOTO So, Tokyo 130-0026 (JP); TOMODA Masaoki, Tokyo 130-0026 (JP)
(74) Representative: Viering, Jentschura & Partner mbB Patent- und Rechtsanwälte
(86) International application number: PCT/JP2013/075988
(87) International publication number: WO 2014/050930

(56) References cited:
- EP-A1- 2 624 044
- EP-A2- 1 174 734
- WO-A1-2008/053712
- WO-A1-2012/043218
- WO-A1-2012/076714
- WO-A1-2012/118086
- JP-A- H09 281 317
- JP-A- H11 106 900
- JP-A- S61 137 840
- JP-A- 2004 029 536
- JP-A- 2004 126 532
- JP-A- 2005 099 119
- JP-A- 2005 114 852
- JP-A- 2005 215 038
- JP-A- 2005 310 266
- JP-A- 2006 126 233
- JP-A- 2007 183 412
- JP-A- 2009 210 677
- JP-A- 2009 237 509
- JP-A- 2011 107 618
- JP-A- 2012 093 689
- JP-A- 2012 093 689
- CITEK ET AL: "Anti-reflective coatings reflect ultraviolet radiation", OPTOMETRY - JOURNAL OF THE AMERICAN OPTOMETRIC ASSOCIATION, ELSEVIER, NL, vol. 79, no. 3, 24 February 2008 (2008-02-24), pages 143-148, XP022496911, ISSN: 1529-1839, DOI: 10.1016/J.OPTM.2007.08.019

## Description

### TECHNICAL FIELD

The present invention relates to an optical component and a method of manufacturing the same.

Priority is claimed on Japanese Patent Application No. 2012-216234 filed on September 28 2012.

### BACKGROUND

In recent years, for spectacle lenses, plastic lenses have been used in many cases due to advantages such as lightweight, excellent impact resistance, and ease of dyeing. In the plastic lens for use in a spectacle lens, an antireflection film is generally provided on both sides of the plastic lens for the purpose of preventing surface reflection. Generally, the antireflection film for a spectacle lens has a low reflection characteristic (wideband low-reflection characteristic) over the entire visible region of 400 nm to 700 nm.

In the case of an optical component such as a spectacle lens, an optical component which is provided with a plastic base and an antireflection film disposed on the base as disclosed in, for example, Patent Documents 1 to 3 is known.

### [Related Art Documents]

### [Patent Documents]

[Patent Document 1] Japanese Unexamined Patent Application, First Publication No. H11-30703
[Patent Document 2] Japanese Unexamined Patent Application, First Publication No. 2006-251760
[Patent Document 3] Japanese Unexamined Patent Application, First Publication No. 2007-127681
EP 1 174 734 A2 discloses that an optical element comprises a base material; and a layer formed on at least one of surfaces of the base material and that a reflectance of a surface of the formed layer for all light rays in a wavelength region of 280 nm to 315 nm and in a wavelength region of 420 nm to 680 nm is smaller than a reflectance of a surface of the base material (cf. Abstract).
EP 2 682 808 A1 discloses that an optical lens includes a lens substrate, an antireflection film arranged to cover the side of one principal surface of the lens substrate, and a transparent pattern formed by a light transmissive material and arranged in a position where the transparent pattern is to be laminated to the antireflection film; wherein the transparent pattern is visible when viewed from the side of the one principal surface of the lens substrate (cf. Abstract).

Further exemplary lenses are disclosed in WO 2012/076714 A1, JP 2005 215038 A, JP 2012 093689 A, JP 2009 237509 A, and "Anti-reflective coatings reflect ultraviolet light", Karl Citek, Optometry, 2008, 79, p. 143-148.

### SUMMARY OF INVENTION

### PROBLEMS TO BE SOLVED BY THE INVENTION

However, from recent studies, it is known that the low reflection characteristic over the entire visible region is not necessarily desirable for visibility and eye health. By cutting the blue region (380 nm to 500 nm) of visible light, glare is reduced, and visibility and contrast are improved.

In addition, regarding eye health, since the blue region (380 nm to 500 nm) of visible light has a high intensity of energy, it is said to be a cause of giving undesirable impact to the retina and the like. The impact caused by blue light is referred to as "blue light hazard". Particularly, the undesired wavelength band is about 435 nm to about 440 nm, and it is said that it is desirable to cut the light in this region.

Recently, in liquid crystal screens that have become the mainstream of displays and LED illumination, a lot of light with a wavelength of about 450 nm is emitted, and thus control of such light rays in the blue region has attracted attention.

Further, exposure of ultraviolet light on the eyeball is also a cause of giving undesirable impact to the retina and the like. It is said that, since outdoor exposure of ultraviolet light for a long time is a cause of keratitis and cataracts, it is desirable to cut the light in the ultraviolet region.

As means for cutting the blue region (380 nm to 500 nm) of visible light, a dyed lens such as sunglasses is known. However, in the dyed lens, the entire visible region is cut, and thus visibility may deteriorate due to a reduction in light intensity.

Further, in spectacle lenses of the related art, there is a possibility that ultraviolet light reflected at the rear surface of the spectacle lens may be incident directly on the eyeball.

An object of an aspect of the present invention is to provide an optical component which has an antiglare effect, is effective for a reduction in feeling of fatigue and prevention of eye trouble, and is excellent in visibility, and a method of manufacturing the optical component.

### MEANS FOR SOLVING THE PROBLEM

According to a first aspect of the present invention, a spectacle lens defined in claim 1 is provided. An exemplary optical component includes: a plastic base; and a multilayer film disposed on at least a rear surface of both surfaces of the plastic base, wherein the multilayer film has a maximum reflectivity of 5% to 50% in a wavelength range of 380 nm to 780 nm and has an average reflectivity of 20% or less in a wavelength range of 280 nm to 380 nm.

According to a second aspect of the present invention, a method defined in claim 7 is provided. An exemplary method of manufacturing an optical component is a method of manufacturing an optical component that is provided with a plastic base and a multilayer film disposed on at least a rear surface of both surfaces of the plastic base, the method including: a step of heating the plastic base; and a step of forming the multilayer film on the plastic base after adjusting a temperature of the plastic base to a predetermined temperature by the heating, wherein the step of forming the multilayer film has a process of forming a high refractive index layer having a multilayer structure by alternately applying a high refractive index material and a low refractive index material in multilayers and has a
process of forming, on the high refractive index layer, a low refractive index layer formed by a low refractive index material having a lower refractive index than a refractive index of the high refractive index layer, and wherein the multilayer film is formed such that a maximum reflectivity in a wavelength range of 380 nm to 780 nm is 5% to 50% and such that an average reflectivity in a wavelength range of 280 nm to 380 nm is 20% or less.

### ADVANTAGE OF THE INVENTION

According to an optical component of an aspect of the present invention, a sufficient antiglare effect can be obtained while maintaining excellent visibility, and ultraviolet light that is incident into the eyeball can be reduced.

In addition, according to a method of manufacturing an optical component of an aspect of the present invention, it is possible to provide an optical component with reduced ultraviolet light incident into the eyeball, with reduced glare, with which it is easy to see, and which has optical characteristics effective for prevention of fatigue and eye trouble.

### BRIEF DESCRIPTION OF THE DRAWINGS

FIG. 1 is a schematic diagram showing an example of an optical component according to a first embodiment.
FIG. 2 is a schematic diagram showing an example of an optical component according to a second embodiment.
FIG. 3 is a schematic diagram showing an example of a deposition apparatus according to the first embodiment.
FIG. 4 is a schematic diagram showing an example of a film formation apparatus according to the first embodiment.
FIG. 5A is a graph showing a spectral characteristic of a lens rear surface of Example 1, not falling under the scope of the invention.
FIG. 5B is numerical data of the spectral characteristic of FIG. 5A.
FIG. 6A is a graph showing a spectral characteristic of a lens rear surface of Example 2, not falling under the scope of the invention.
FIG. 6B is numerical data of the spectral characteristic of FIG. 6A.
FIG. 7A is a graph showing a spectral characteristic of a lens rear surface of Example 3, not falling under the scope of the invention.
FIG. 7B is numerical data of the spectral characteristic of FIG. 7A.
FIG. 8A is a graph showing a spectral characteristic of a lens rear surface of Comparative Example 1.
FIG. 8B is numerical data of the spectral characteristic of FIG. 8A.
FIG. 9A is data showing the spectral characteristic of lens front surfaces of Examples 1 to 3 and a lens front surface of Comparative Example 1.
FIG. 9B is numerical data of the spectral characteristic of FIG. 9A.
FIG. 10A is a graph showing a spectral characteristic of a lens rear surface of Example 4.
FIG. 10B is numerical data of the spectral characteristic of FIG. 10A.
FIG. 11A is a graph showing a spectral characteristic of a lens rear surface of Example 5.
FIG. 11B is numerical data of the spectral characteristic of FIG. 11A.
FIG. 12A is a graph showing a spectral characteristic of a lens rear surface of Example 6.
FIG. 12B is numerical data of the spectral characteristic of FIG. 12A.
FIG. 13A is a graph showing a spectral characteristic of a lens rear surface of Example 7.
FIG. 13B is numerical data of the spectral characteristic of FIG. 13A.

### DESCRIPTION OF EMBODIMENTS

Hereinafter, embodiments of the present invention will be described in detail.

The embodiments are described in detail to achieve a better understanding of the points of the invention, but the present invention is not limited thereto unless otherwise stated.

### (1) First Embodiment

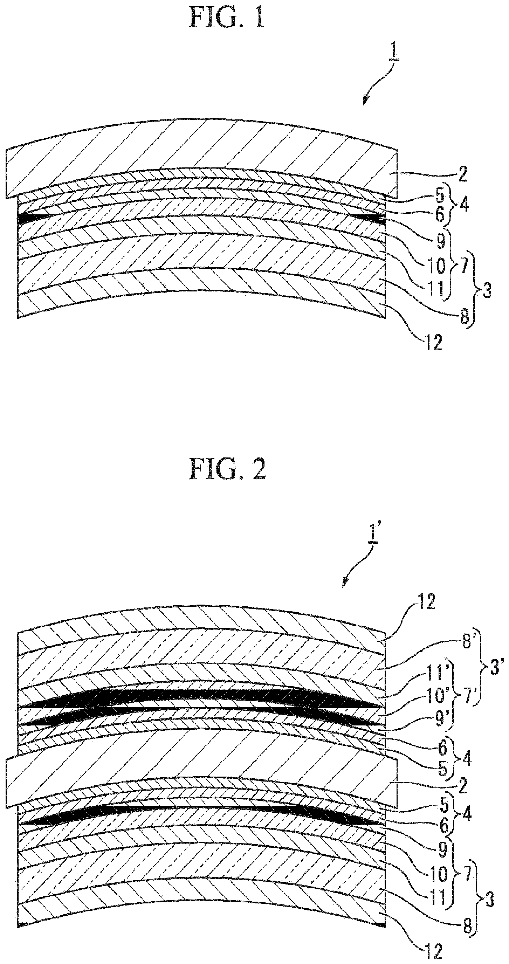

FIG. 1 is a sectional side view schematically showing a first embodiment of an optical component of the present invention. The reference numeral 1 in FIG. 1 represents an optical component for a spectacle lens.

The optical component 1 includes a plastic base 2 and an inorganic multilayer film 3 disposed on a rear surface of the plastic base 2. In the present embodiment, a functional thin film 4 is disposed between the rear surface of the plastic base 2 and the inorganic multilayer film 3. In the present embodiment, the functional thin film 4 is formed by a primer layer 5 and a hard coating layer 6.

In the present embodiment, an arbitrary film which corresponds to the inorganic multilayer film 3 and the functional thin film 4 is formed on a front surface of the plastic base 2; however, an illustration and description of the film are omitted.

The plastic base 2 is made of, for example, transparent plastic such as an acryl-based resin, a thiourethane-based resin, a methacryl-based resin, an allyl-based resin, an episulfide-based resin, a polycarbonate-based resin, a polyurethane-based resin, a polyester-based resin, a polystyrene-based resin, an episulfide resin, a polyethersulfone resin, a poly-4-methylpentene-1 resin, a diethylene glycol bis allyl carbonate resin (CR-39), a polyvinyl chloride resin, a halogen-containing copolymer, and a sulfur-containing copolymer.

In addition, in the present embodiment, for example, one of 1.50, 1.60, 1.67, and 1.74 is selected and used as a refractive index (nd) of the plastic base 2. When the refractive index of the plastic base 2 is set to 1.6 or greater, an allyl carbonate-based resin, an acrylate-based resin, a methacrylate-based resin, a thiourethane-based resin and the like can be used for the plastic base 2.

Further, the plastic base 2 can have a function of absorbing ultraviolet light. That is, the resin that constitutes the plastic base 2 can include an ultraviolet absorber.

Alternatively, the ultraviolet absorber may be included in the functional thin film 4 disposed on the surface of the plastic base 2. In this case, the plastic base 2 is impregnated with the ultraviolet absorber component in the functional thin film 4.

In addition, the plastic base 2 may not be transparent, or may be colored if it is translucent. The transmissivity of the colored plastic base 2 can be 5% to 85%.

The functional thin film 4 is disposed between the plastic base 2 and the inorganic multilayer film 3 as described above, and is formed of the primer layer 5 which is disposed in contact with the plastic base 2 and the hard coating layer 6 which is disposed in contact with the primer layer 5 and in contact with the inorganic multilayer film 3.

The primer layer 5 is used to improve the adhesion between the plastic base 2 and the hard coating layer 6 and functions as an adhesion layer. In addition, the primer layer 5 is also used to absorb the impact on the optical component 1 and functions as an impact absorption layer.

The primer layer 5 contains a polyurethane-based resin as a main component, and in the present embodiment, the primer layer 5 is a polyurethane-based resin containing, for example, particulates of an inorganic material. Note that, the primer layer 5 may include at least one type of an acryl-based resin, a methacryl-based resin, and an organosilicon-based resin. The thickness (actual thickness) of the primer layer 5 can be about 0.5 µm to about 1.0 µm.

The primer layer 5 can be formed with a predetermined thickness on the plastic base 2 by dipping the plastic base 2 in a liquid for forming the primer layer 5 and then lifting and drying the plastic base 2. As the liquid for forming the primer layer 5, for example, a liquid in which a resin to be the primer layer 5 and an inorganic oxide particulate sol are dispersed or dissolved in water or an alcohol-based solvent and mixed therewith can be used.

The hard coating layer 6 has a function of protecting the plastic base 2 and suppressing impact to the plastic base 2 and functions as an abrasion-resistant film.

The hard coating layer 6 is formed of, for example, an organosiloxane-based hard coating layer. The organosiloxane-based hard coating layer is a layer in which particulates of inorganic oxide are dispersed in an organosiloxane-based resin. As the inorganic oxide, for example, rutile-type titanium oxide and oxides of silicon, tin, zirconium, and antimony are used. In addition, the hard coating layer 6 may be, for example, a colloidal silica-containing organosilicon-based resin as disclosed in Japanese Examined Patent Application, Second Publication No. H4-55615. The thickness (actual thickness) of the hard coating layer 6 can be about 2 µm to about 4 µm.

The hard coating layer 6 can be formed with a predetermined thickness on the primer layer 5 on the plastic base 2 by dipping the plastic base 2 having the primer layer 5 formed thereon in a liquid for forming the hard coating layer 6 and then lifting and drying the plastic base 2. As the liquid for forming the hard coating layer 6, for example, a liquid in which a resin to be the hard coating layer 6 and an inorganic oxide particulate sol are dispersed or dissolved in water or an alcohol-based solvent and mixed therewith can be used.

When the refractive index of the functional thin film 4 including the primer layer 5 and the hard coating layer 6 is substantially the same as the refractive index of the plastic base 2, it is possible to suppress a reduction in transmissivity and the occurrence of interference fringes which are caused by the reflection at an interface between the functional thin film 4 and the plastic base 2. Accordingly, the refractive index of the functional thin film 4 is adjusted in accordance with the refractive index of the plastic base 2. The adjustment of the refractive index of the functional thin film 4 (primer layer 5 and hard coating layer 6) can be performed by selecting the type (physical properties) of resin which is a main component of the functional thin film 4, or by selecting the type (physical properties) of particulates added to the resin which is a main component, or the like.

In the present embodiment, the functional thin film 4 is formed to include the primer layer 5 and the hard coating layer 6. However, for example, one or both of the primer layer 5 and the hard coating layer 6 may be omitted. In addition, as a constituent film of the functional thin film 4, for example, a dielectric film made of indium tin oxide (ITO) or the like, or a metallic film may be disposed in addition to the primer layer 5 and the hard coating layer 6.

In addition, in the present embodiment, a dielectric film or a metallic film having a thickness of 20 nm or less may be disposed between a high refractive index inorganic material and a low refractive index inorganic material constituting the inorganic multilayer film. The thickness of the dielectric film or the metallic film may be 10 nm or less.

The inorganic multilayer film 3 has a double-layer configuration, which has a high refractive index layer 7 having a multilayer structure in which a high refractive index inorganic material and a low refractive index inorganic material are alternately applied in multilayers on the plastic base 2 and has a low refractive index layer 8 made of a low refractive index inorganic material having a lower refractive index than the refractive index of the high refractive index layer 7 on the high refractive index layer 7. The inorganic multilayer film 3 has a function as an antireflection film that prevents reflection of incident light.

In the present embodiment, the inorganic multilayer film 3 is designed to have a maximum reflectivity of 3% to 50% in a wavelength range (first wavelength range) of 380 nm to 780 nm.

The maximum reflectivity in the first wavelength range is 3% or more, is preferably 4% or more, and is more preferably 5% or more. When the maximum reflectivity in the first wavelength range is set to 3% or less, a person wearing such glasses cannot obtain a filter function such as a sufficient antiglare effect and is difficult to obtain a fatigue prevention effect and an eye trouble prevention effect according to the inorganic multilayer film 3.

That is, when the maximum reflectivity in the first wavelength range of the inorganic multilayer film 3 is 3% or less, visible light that is incident on a front surface (surface, opposite side of a face surface) of a spectacle lens transmits through the inorganic multilayer film 3 with a high transmissivity close to 100% and exits from the rear surface (face surface side) of the spectacle lens (that is, the filter function cannot be obtained). Therefore, it is difficult to obtain a fatigue prevention effect and an eye trouble prevention effect.

The maximum reflectivity in the first wavelength range is 50% or less, is preferably 35% or less, and is more preferably 15% or less. When the maximum reflectivity in the first wavelength range is set to over 50%, a transmission light intensity may be reduced, and visibility may deteriorate.

That is, when the maximum reflectivity in the first wavelength range of the inorganic multilayer film 3 exceeds 50%, visible light that is incident on the front surface (surface, opposite side of the face surface) of a spectacle lens transmits through the inorganic multilayer film 3 with a low transmissivity of 50% or less and exits from the rear surface (face surface side) of the spectacle lens (that is, transmission light intensity is reduced). Therefore, visibility deteriorates.

In addition, in the present embodiment, an inorganic multilayer film is used as a multilayer film. However, an organic multilayer film may be used as long as the advantageous effect of the present invention is not impaired.

Further, in the present embodiment, the inorganic multilayer film 3 is designed to have an average reflectivity of 20% or less in a wavelength range (second wavelength range) of 280 nm to 380 nm. The average reflectivity in the second wavelength range is preferably 15% or less.

When the average reflectivity in the second wavelength range is set to 20% or less, light in the ultraviolet region can be sufficiently cut.

That is, when the average reflectivity in the second wavelength range of the inorganic multilayer film 3 is 20% or less, ultraviolet light that is incident on the rear surface (face surface side) of a spectacle lens is reflected by the inorganic multilayer film 3 with a low reflectivity of 20% or less and exits from the rear surface (toward the eyeball) of the spectacle lens. Therefore, the intensity of light in the ultraviolet region that is incident on the eyeball can be reduced (that is, light in the ultraviolet region is cut).

The average reflectivity in the second wavelength range is preferably lower. However, in view of the reflectivity in the first wavelength range of 380 nm to 780 nm (capability of cutting light in the visible region), the average reflectivity in the second wavelength range is preferably 3% or more, is more preferably 4% or more, and is further preferably 5% or more.

When the reflectivity characteristics in the above wavelength region of the inorganic multilayer film 3 are in the above range, in use as a spectacle lens, a filter function such as a sufficient antiglare effect can be obtained while maintaining excellent visibility, and ultraviolet light that is incident into the eyeball can be reduced.

In addition, in the present embodiment, an inorganic multilayer film is used as a multilayer film. However, an organic multilayer film may be used as long as the advantageous effect of the present invention is not impaired.

Further, in the present embodiment, an inorganic multilayer film (not shown) can be disposed on the front surface of the plastic base 2.

The average reflectivity in the wavelength range of 280 nm to 380 nm of the inorganic multilayer film disposed on the front surface of the plastic base 2 can be greater than the average reflectivity in the wavelength range of 280 nm to 380 nm of the inorganic multilayer film 3 disposed on the rear surface of the plastic base 2. For example, it is possible to design the inorganic multilayer film such that the average reflectivity in the wavelength range of 280 nm to 380 nm of the inorganic multilayer film 3 disposed on the rear surface of the plastic base 2 is 3% to 15% and that the average reflectivity in the wavelength range of 280 nm to 380 nm of the inorganic multilayer film disposed on the front surface of the plastic base 2 is 20% or more. By disposing the inorganic multilayer film that satisfies such a reflectivity condition, it is possible to obtain a spectacle lens that is further advantageous for a reduction of ultraviolet light.

In the present embodiment, the high refractive index layer 7 is formed of a first layer 9 made of a high refractive index inorganic material which is provided close to the plastic base 2, a second layer 10 made of a low refractive index inorganic material which is provided on the first layer 9, and a third layer 11 made of a high refractive index inorganic material which is provided on the second layer 10.

The first layer 9 is provided in contact with the hard coating layer 6 and is made of zirconium dioxide (ZrO₂) having a refractive index of 2.0. Other than ZrO₂, for example, titanium dioxide (TiO₂) and tantalum dioxide (Ta₂O₅) can be used as the high refractive index inorganic material constituting the first layer 9. Furthermore, the first layer 9 can also be formed of oxide of an alloy including several elements selected from zirconium, titanium, and tantalum. In addition to these, for example, aluminum oxide (Al₂O₃), yttrium dioxide (Y₂O₃), hafnium dioxide (HfO₂), and niobium dioxide (Nb₂O₅) can also be used.

Here, in this manner, when the first layer 9 is formed of a high refractive index inorganic material (ZrO₂), the adhesion between the first layer 9 and the hard coating layer 6 can be obtained. That is, this is because the adhesion (adhesion power) between the layer (ZrO₂) made of a high refractive index inorganic material and the hard coating layer 6 is greater than the adhesion (adhesion power) between the layer (SiO₂) made of a low refractive index inorganic material and the hard coating layer 6. In addition, even when the functional thin film 4 (primer layer 5 and hard coating layer 6) is omitted, the adhesion (adhesion power) between the high refractive index layer (ZrO₂) and the plastic base 2 is greater than the adhesion (adhesion power) between the low refractive index layer (SiO₂) and the plastic base 2, and thus using a high refractive index inorganic material is further advantageous regarding adhesion.

The second layer 10 is provided in contact with the first layer 9 and is made of silicon dioxide (SiO₂) having a refractive index of 1.47. Other than SiO₂, for example, MgF₂ having a refractive index of 1.36 can be used as the low refractive index inorganic material constituting the second layer 10.

The third layer 11 is provided in contact with the second layer 10 and is made of zirconium dioxide (ZrO₂) as in the first layer 9. As in the first layer 9, the third layer 11 can be formed by a high refractive index inorganic material other than ZrO₂.

In addition, the high refractive index layer 7 can be formed so as not to have a three-layer structure of the first layer 9, the second layer 10, and the third layer 11 as described above, but to be configured in two layers or in four or more layers if the above-described reflectivity condition is satisfied.

The low refractive index layer 8 is provided in contact with the third layer 11 and is made of silicon dioxide (SiO₂) as in the second layer 10.

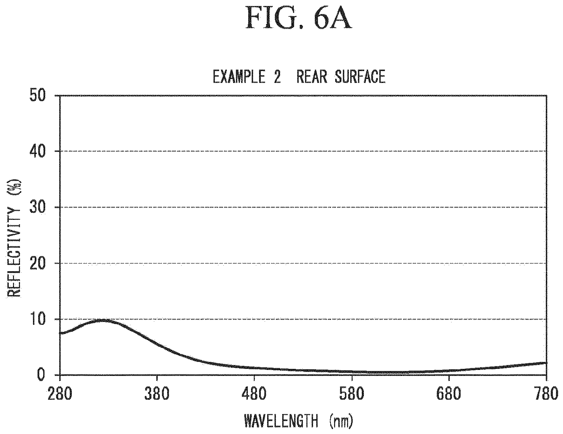

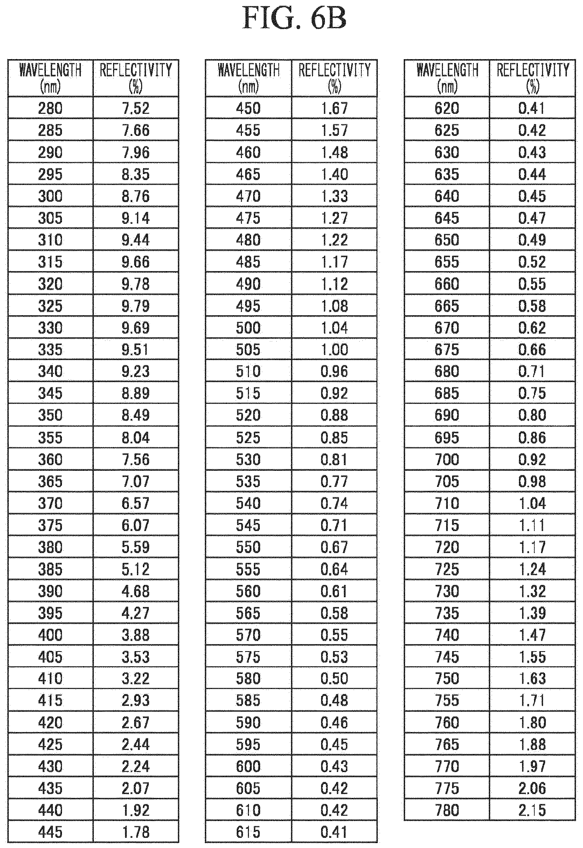

The inorganic multilayer film 3 of the above configuration can have, for example, at least one (for example, one) extreme value in the wavelength range of 280 nm to 380 nm in a spectral characteristic curve showing a relationship between a light wavelength and a reflectivity of the inorganic multilayer film 3 at the light wavelength, as shown in FIG. 6A, 6B (lens rear surface of Example 2 described later). Examples of the extreme value include a local minimum and a local maximum, and a local maximum is preferable.

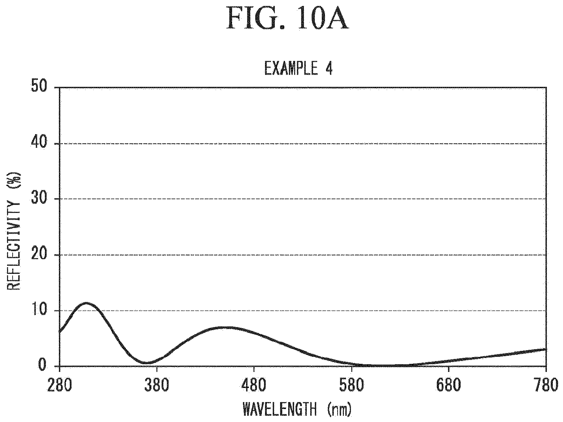

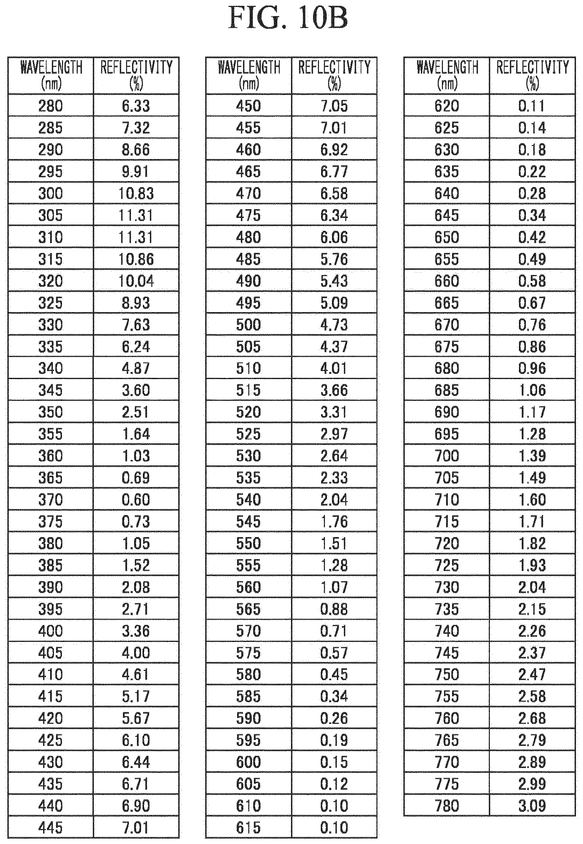

Further, the inorganic multilayer film 3 can have, for example, at least one (for example, one) extreme value in the wavelength range of 380 nm to 780 nm in a spectral characteristic curve, as shown in FIG. 10A, 10B (lens rear surface of Example 4 described later). Examples of the extreme value include a local minimum and a local maximum, and similarly, a local maximum is preferable.

In addition, in the present embodiment, on the inorganic multilayer film 3, that is, on the outermost layer (low refractive index layer 8) of the inorganic multilayer film 3 which is the farthest from the plastic base 2, a water-and-oil repellent film 12 including a fluorine-substituted alkyl group-containing organosilicon compound is provided.

The water-and-oil repellent film 12 contains the fluorine-substituted alkyl group-containing organosilicon compound as a main component, and has liquid repellency (water repellency and oil repellency). That is, the water-and-oil repellent film 12 reduces the surface energy of the optical component to exhibit a function of preventing water marks and preventing contamination, and improves the sliding property of the surface of the optical component. As a result, abrasion resistance can be improved.

As the fluorine-substituted alkyl group-containing organosilicon compound, one of the following general formulas (1) to (6) is selected:

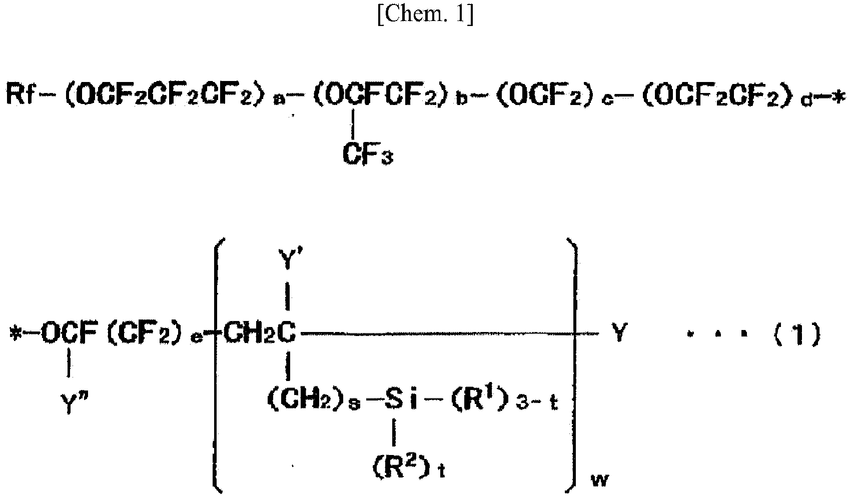

(in the formula (1), Rf represents a straight or branched perfluoroalkyl group with 1 to 16 carbon atoms, Y represents iodine or hydrogen, Y' represents hydrogen or a lower alkyl group with 1 to 5 carbon atoms, Y" represents fluorine or a trifluoromethyl group, R¹ represents a hydrolyzable group, R² represents hydrogen or an inert monovalent organic group, a, b, c, and d each represents an integer of 0 to 200, e represents 0 or 1, s and t each represents an integer of 0 to 2, and w represents an integer of 1 to 10);

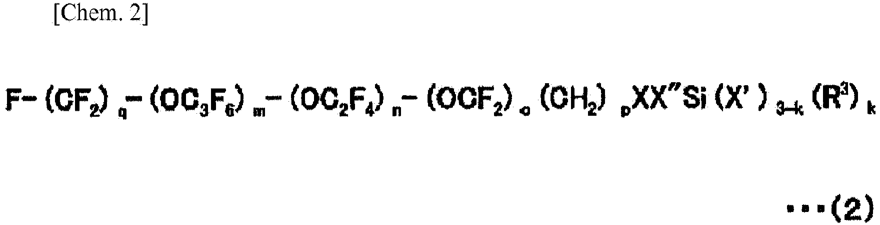

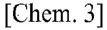

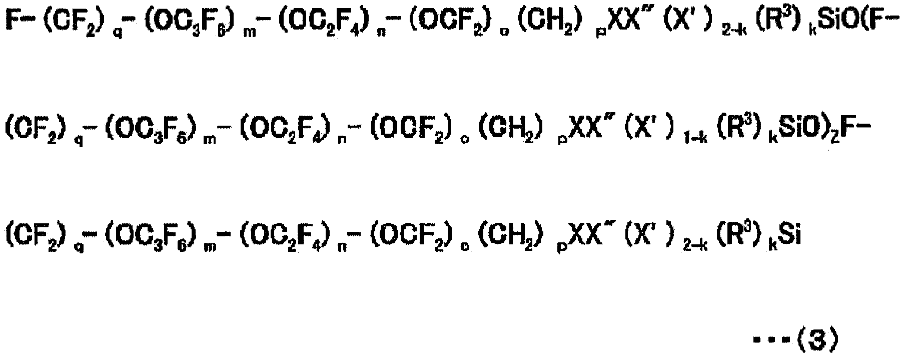

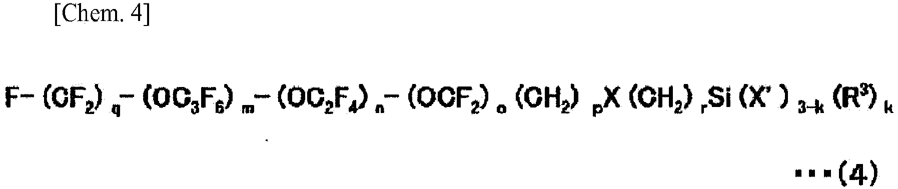

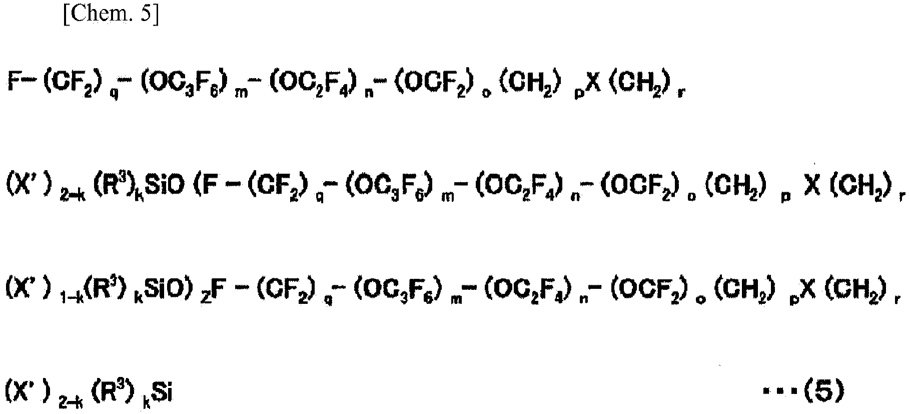

(in the formulas (2) to (5), X represents oxygen or a divalent organic group, X' represents a hydrolyzable group, X" represents a divalent organosilicon group, R³ represents a straight or branched alkylene group with 1 to 22 carbon atoms, q represents an integer of 1 to 3, m, n, and o each represents an integer of 0 to 200, p represents 1 or 2, r represents an integer of 2 to 20, k represents an integer of 0 to 2, and z represents an integer of 0 to 10 when k is 0 or 1); and 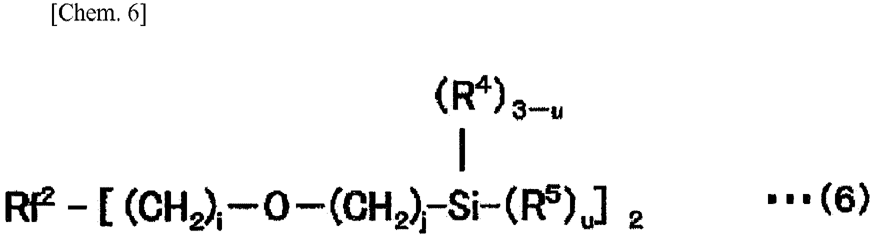 (in the formula (6), Rf² represents a divalent straight perfluoropolyether group, R⁴ represents a phenyl group or an alkyl group with 1 to 4 carbon atoms, R⁵ represents a hydrolyzable group, i represents an integer of 0 to 2, j represents an integer of 1 to 5, and u represents 2 or 3).

Here, in order to give excellent durability to the water-and-oil repellent film 12, the fluorine-substituted alkyl group-containing organosilicon compound selected from the general formulas (1) to (5) and the fluorine-substituted alkyl group-containing organosilicon compound selected from the general formula (6) can be combined and used.

As the fluorine-substituted alkyl group-containing organosilicon compound shown in the general formulas (1) to (5), Optool DSX and Optool AES4 manufactured by Daikin Industries, Ltd., and the like can be used. In addition, as the fluorine-substituted alkyl group-containing organosilicon compound shown in the general formula (6), KY-130 and KY-164 manufactured by Shin-Etsu Chemical Co., Ltd., and the like can be used.

### (2) Second Embodiment

FIG. 2 is a sectional side view schematically showing a second embodiment of an optical component of the present invention. The reference numeral 1' in FIG. 2 represents an optical component for a spectacle lens. In FIG. 2, the same constituent elements as in the optical component 1 shown in FIG. 1 will be denoted by the same reference numerals, and descriptions thereof will be omitted here.

The optical component 1' includes, in addition to the structure of the optical component 1 of the first embodiment, an inorganic multilayer film 3' disposed on a front surface of a plastic base 2. In the present embodiment, a functional thin film 4 is disposed between the front surface of the plastic base 2 and the inorganic multilayer film 3'. The functional thin film 4 is formed of a primer layer 5 and a hard coating layer 6 in the present embodiment.

The inorganic multilayer film 3' has a double-layer configuration which has a high refractive index layer 7' having a multilayer structure in which a high refractive index inorganic material and a low refractive index inorganic material are alternately applied in multilayers on the plastic base 2, and has a low refractive index layer 8' made of a low refractive index inorganic material having a lower refractive index than the refractive index of the high refractive index layer 7' on the high refractive index layer 7'.

In the present embodiment, the high refractive index layer 7' is formed of a first layer 9' made of a high refractive index inorganic material which is provided close to the plastic base 2, a second layer 10' made of a low refractive index inorganic material which is provided on the first layer 9', and a third layer 11' made of a high refractive index inorganic material which is provided on the second layer 10'.

In the present embodiment, examples of the inorganic materials which are used in the first layer 9', the second layer 10', and the third layer 11' include the same materials as the inorganic materials which are used in the first layer 9, the second layer 10, and the third layer 11 in the first embodiment.

Like the high refractive index layer 7 in the first embodiment, the high refractive index layer 7' can be formed not to have a three-layer structure, but to be configured in two layers or in four or more layers.

In the present embodiment, the inorganic multilayer film 3' is designed, similarly to the inorganic multilayer film 3 in the first embodiment, such that the maximum reflectivity in the wavelength range of 380 nm to 780 nm is 3% to 50% and that the average reflectivity in the wavelength range of 280 nm to 380 nm is 20% or less.

By disposing the inorganic multilayer film that satisfies such a reflectivity condition on both surfaces of the plastic base 2, it is possible to obtain a spectacle lens that is further advantageous for an antiglare effect, visibility, and a reduction of ultraviolet light.

In the present embodiment, the functional thin film 4 is formed to include the primer layer 5 and the hard coating layer 6. However, as in the first embodiment, for example, one or both of the primer layer 5 and the hard coating layer 6 may be omitted. In addition, as a constituent film of the functional thin film 4, for example, a dielectric film made of indium tin oxide (ITO) or the like, or a metallic film may be disposed in addition to the primer layer 5 and the hard coating layer 6.

In addition, in the present embodiment, a dielectric film or a metallic film having a thickness of 20 nm or less may be disposed between a high refractive index inorganic material and a low refractive index inorganic material constituting the inorganic multilayer film. The thickness of the dielectric film or the metallic film may be 10 nm or less.

In addition, in the present embodiment, an inorganic multilayer film is used as a multilayer film. However, an organic multilayer film may be used as long as the advantageous effect of the present invention is not impaired.

### [Manufacturing Method of Optical Component]

Next, an embodiment of a method of manufacturing the optical component according to the present invention will be described based on the embodiment of the optical component 1.

The manufacturing method in the present embodiment includes a step of forming the functional thin film 4 (primer layer 5 and hard coating layer 6) on the plastic base 2 by a method which is the same as in the conventional case, a step of heating the plastic base 2, a step of forming the inorganic multilayer film 3 on the plastic base 2 after adjusting the temperature of the plastic base 2 to a predetermined temperature (for example, 70 degrees Celsius) by the heating, and a step of forming the water-and-oil repellent film 12 on the inorganic multilayer film 3.

The step of forming the inorganic multilayer film 3 has a process of forming the high refractive index layer 7 having a multilayer structure by alternately applying a high refractive index inorganic material and a low refractive index inorganic material in multilayers, and a process of forming, on the high refractive index layer 7, the low refractive index layer 8 made of a low refractive index inorganic material. For example, a vacuum deposition method can be used to form the layers.

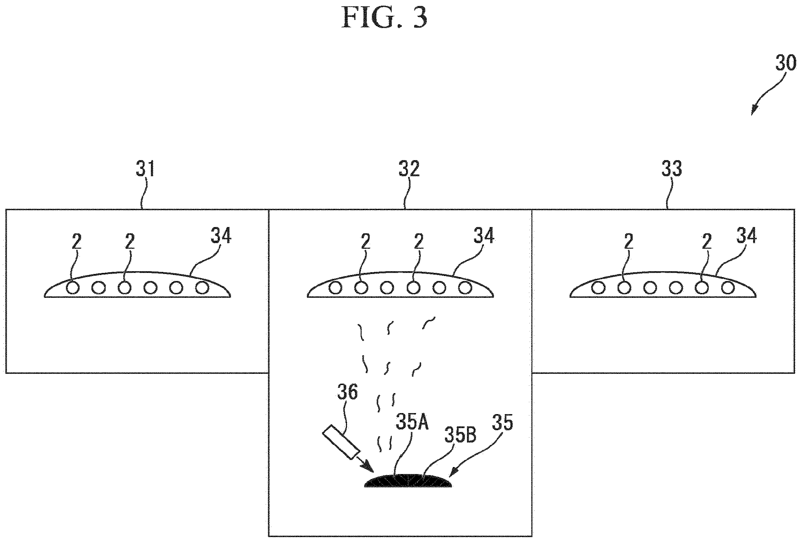

FIG. 3 is a diagram showing an example of a deposition apparatus 30 for forming the layers of the inorganic multilayer film 3. As shown in FIG. 3, the deposition apparatus 30 includes a first film formation chamber 31, a second film formation chamber 32, and a third film formation chamber 33. The first film formation chamber 31, the second film formation chamber 32, and the third film formation chamber 33 are configured such that the inside of each is decompressed substantially to a vacuum and is held in that state. In addition, in the deposition apparatus 30, the internal temperature of each of the first film formation chamber 31, the second film formation chamber 32, and the third film formation chamber 33 is adjustable using a temperature control unit (not shown in the drawing).

The deposition apparatus 30 is provided with a holding member 34 in the internal space of each of the first film formation chamber 31, the second film formation chamber 32, and the third film formation chamber 33. The holding member 34 has a curved upper surface (holding surface) and is configured to be rotatable. The holding member 34 is configured to hold a plurality of plastic bases 2 on the upper surface thereof.

A deposition source 35 of the deposition apparatus 30 is disposed in a space inside of the second film formation chamber 32. The deposition source 35 includes a first deposition source 35A and a second deposition source 35B. In addition, a light source device 36 which is capable of irradiating the deposition source 35 with beams is disposed in the second film formation chamber 32. The light source device 36 can irradiate the deposition source 35 with electrons and sputter constituent particles of the deposition source 35.

The deposition source 35 is irradiated with the electrons emitted from the light source device 36, and thereby a material (gas) for forming the inorganic multilayer film 3 is ejected from the deposition source 35.

For example, the light source device 36 irradiates the first deposition source 35A with beams, and thereby ZrO₂ vapor is ejected from the first deposition source 35A and supplied to be deposited onto the plastic base 2 which is held on the holding member 34. Accordingly, the first layer 9 and the third layer 11 in the high refractive index layer 7 of the inorganic multilayer film 3 can be formed. Similarly, by irradiating the second deposition source 35B with beams, SiO₂ vapor is ejected from the second deposition source 35B and supplied to be deposited onto the plastic base 2 which is held on the holding member 34. Accordingly, the second layer 10 in the high refractive index layer 7 of the inorganic multilayer film 3 and the low refractive index layer 8 can be formed.

That is, by alternately performing the irradiation of the first deposition source 35A with beams and the irradiation of the second deposition source 35B with beams, a layer made of a high refractive index inorganic material and a layer made of a low refractive index inorganic material can be alternately formed and applied on the plastic base 2 which is held on the holding member 34. In the present invention, the inorganic multilayer film 3 is designed to have a maximum reflectivity of 3% to 50% in a wavelength range of 380 nm to 780 nm and to have an average reflectivity of 20% or less in a wavelength range of 280 nm to 380 nm.

A deposition source made of zirconium oxide (ZrO) may be used as the first deposition source 35A, and the first deposition source 35A may be irradiated with beams while introducing oxygen to the internal space of the second film formation chamber 32 to form a high refractive index inorganic material layer made of zirconium dioxide (ZrO₂).

In addition, in the method of manufacturing the optical component according to the present embodiment, the step of forming the inorganic multilayer film 3 may include a step of performing ion beam assisted film formation to form at least one layer of the layers constituting the inorganic multilayer film 3. The method of manufacturing the optical component according to the present embodiment includes such a step, and thereby a dielectric film is disposed between the high refractive index inorganic material and the low refractive index inorganic material constituting the inorganic multilayer film.

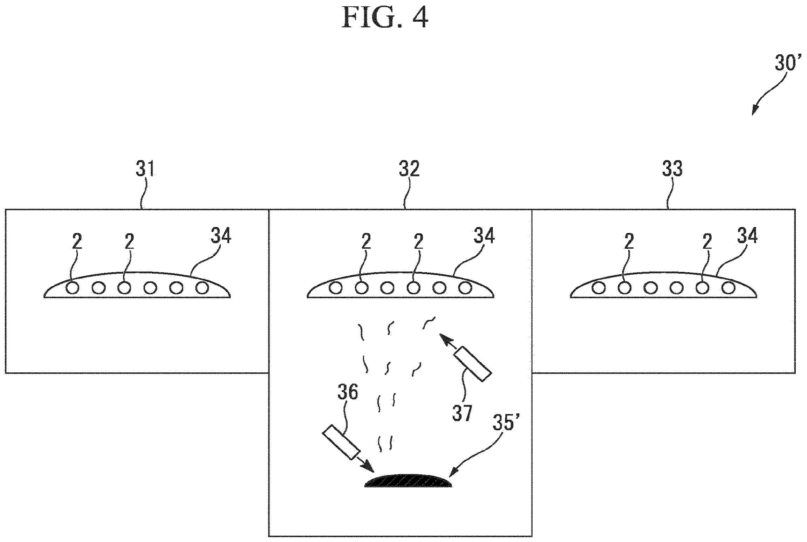

FIG. 4 is a diagram showing an example of a film formation apparatus 30' used to apply ion beam assisting. The film formation apparatus 30' is provided with an ion gun 37 in the second film formation chamber of the deposition apparatus 30 shown in FIG. 3. In FIG. 4, the same constituent elements as in the deposition apparatus 30 shown in FIG. 3 will be denoted by the same reference numerals, and descriptions thereof will be omitted here.

In the present embodiment, when a dielectric film of ITO or the like is disposed between the high refractive index layer 7 and the low refractive index layer 8 constituting the inorganic multilayer film 3, ion beam assisted film formation is performed.

Note that, at least one layer of the layers constituting the inorganic multilayer film 3 may be formed by ion beam assisted film formation in the second film formation chamber 32, and the layer formed by ion beam assisted film formation is not limited to a dielectric film.

In the present embodiment, the second film formation chamber of the film formation apparatus 30' is configured by a holding member 34 to hold a base having a high refractive index layer 7 formed on the plastic base 2, a deposition source 35', an ion gun 37 disposed away from the deposition source 35', and a light source device 36, as main constituents.

In addition, the film formation apparatus 30' is configured such that the inside of the film formation apparatus 30' can be decompressed substantially to vacuum and that the area surrounding the plastic base 2 can be held in a vacuum atmosphere. Moreover, an atmosphere gas supply source such as a gas cylinder is connected to the film formation apparatus 30', and the film formation apparatus 30' is configured such that the inside of the vacuum vessel can be made to be in a low-pressure state such as vacuum and in an inert gas atmosphere of an oxygen gas, an argon gas, or the like or an inert gas atmosphere including oxygen.

The deposition source 35' includes, for example, ITO. The light source device 36 irradiates the deposition source 35' with beams, and thereby gasified ITO is ejected from the deposition source 35' and is supplied to the plastic base 2 which is held on the holding member 34. Thus, a dielectric film made of ITO can be formed on the high refractive index layer 7.

An ion gun 37 is disposed inside of the second film formation chamber 32 and includes a gas introduction unit used to introduce a gas to be ionized and an extraction electrode provided at the front. The ion gun 37 is a device configured to ionize part of gas atoms or gas molecules, control the ionized particles as ion beams by an electric field which is produced by the extraction electrode, and irradiate a sample with the ion beams.

The light source device 36 has a configuration similar to that of the ion gun 37, and is capable of irradiating the deposition source 35' with electrons to sputter constituent particles of the deposition source 35'. Note that, since it is important that the film formation apparatus 30' is capable of sputtering the constituent particles of the deposition source 35', the film formation apparatus 30' may be configured to be capable of applying a voltage to the deposition source 35' using a high-frequency coil or the like to sputter the constituent particles of the deposition source 35', and the light source device 36 may be omitted.

Next, a case in which a dielectric film of ITO is formed onto a high refractive index layer 7 on the plastic base 2 using the film formation apparatus 30' having the above configuration will be described. When a dielectric film of ITO is formed, a deposition source 35' of ITO is used, and a configuration is used in which an upper surface of the holding member 34 can be irradiated with ions emitted from the ion gun 37. Next, the inside of the film formation chamber 32 which stores the plastic base 2 is evacuated to be in a decompressed atmosphere. Then, the ion gun 37 and the light source device 36 are operated.

When the light source device 36 irradiates the deposition source 35' with electrons, the constituent particles of the deposition source 35' are sputtered, and fly to arrive on the high refractive index layer 7. Then, the constituent particles sputtered from the deposition source 35' are deposited on the high refractive index layer 7, and at the same time, the ion gun 37 irradiates the high refractive index layer 7 with argon ions as the ion beams.

In the present embodiment, the ion beam assisting is performed using at least one of gases selected from an inert gas, an oxygen gas, and a mixed gas of an inert gas and an oxygen gas. For example, argon can be used as the inert gas.

When the inorganic multilayer film 3 is formed in this manner, the water-and-oil repellent film 12 is formed on the inorganic multilayer film 3.

Examples of the method of forming the water-and-oil repellent film 12 include wet methods such as a dipping method, a spin-coating method and a spray method, and dry methods such as a vacuum deposition method.

Generally, a dipping method is frequently used from among the wet methods. This method is a method in which an optical component with layers up to the inorganic multilayer film 3 formed thereon is dipped in a liquid in which a fluorine-substituted alkyl group-containing organosilicon compound is dissolved in an organic solvent, and is lifted under a predetermined condition to be dried to thereby form a film. As the organic solvent, perfluorohexane, perfluoro-4-methoxybutane, perfluoro-4-ethoxybutane, m-xylene hexafluoride, or the like is used.

The dilute concentration achieved using the organic solvent can be 0.01 wt % to 0.5 wt %, and is preferably 0.03 wt % to 0.1 wt %. When the concentration is too low, the water-and-oil repellent film 12 having a sufficient film thickness may not be obtained. In addition, when the concentration is too high, uneven coating may easily occur and material costs may also increase.

A vacuum deposition method is frequently used from among dry methods. This method is a method in which a fluorine-substituted alkyl group-containing organosilicon compound is heated and evaporated in a vacuum chamber to form the water-and-oil repellent film 12.

In the optical component 1 formed in this manner, the inorganic multilayer film 3 is designed to have a maximum reflectivity of 3% to 50% in a wavelength range of 380 nm to 780 nm and to have an average reflectivity of 20% or less in a wavelength range of 280 nm to 380 nm, and thus excellent performance regarding both reflection characteristics and visibility can be secured as described above.

In addition, in the method of manufacturing the optical component, such an excellent optical component with good balance can be securely provided.

### EXAMPLES

Hereinafter, examples of the embodiments of the present invention will be described in more detail, but the present invention is not limited to the following examples.

### <<Test 1>>

On a urethane-based synthetic resin substrate, a silicon-based hard coating having a refractive index of 1.67 and a primer coating having a refractive index of 1.67 were prepared by thermal curing, and film formation was performed by a vacuum deposition method as follows.

### <Example 1>

Rear Surface (face side): A lens was set in a rotating dome provided in a vacuum chamber, the temperature in the vacuum chamber was adjusted to 70 degrees Celsius by heating, air was exhausted until the pressure was adjusted to 1.0x10⁻³ Pa, and Ar ion beam cleaning was carried out for 60 seconds under conditions of an acceleration voltage of 500 V and an acceleration current of 100 mA. Then, a first layer ZrO₂ (refractive index: 2.00) having an optical film thickness of 0.060λ, a second layer SiO₂ (refractive index: 1.47) having an optical film thickness of 0.110λ, a third layer ZrO₂ (refractive index: 2.00) having an optical film thickness of 0.155λ, a fourth layer SiO₂ (refractive index: 1.47) having an optical film thickness of 0.050λ, a fifth layer ZrO₂ (refractive index: 2.00) having an optical film thickness of 0.215λ, a sixth layer SiO₂ (refractive index: 1.47) having an optical film thickness of 0.040λ, a seventh layer ZrO₂ (refractive index: 2.00) having an optical film thickness of 0.080λ, and an eighth layer SiO₂ (refractive index: 1.47) having an optical film thickness of 0.300λ were sequentially applied from the plastic base side. λ as a center wavelength of design was 500 nm.

Front Surface: Using the same apparatus as in the case of the surface on the face side, and after pretreatment under the same processing atmosphere, a first layer ZrO₂ (refractive index: 2.00) having an optical film thickness of 0.135λ, a second layer SiO₂ (refractive index: 1.47) having an optical film thickness of 0.085λ, a third layer ZrO₂ (refractive index: 2.00) having an optical film thickness of 0.200λ, a fourth layer SiO₂ (refractive index: 1.47) having an optical film thickness of 0.055λ, a fifth layer ZrO₂ (refractive index: 2.00) having an optical film thickness of 0.190λ, and a sixth layer SiO₂ (refractive index: 1.47) having an optical film thickness of 0.345λ were sequentially applied from the plastic base side. λ as a center wavelength of design was 500 nm.

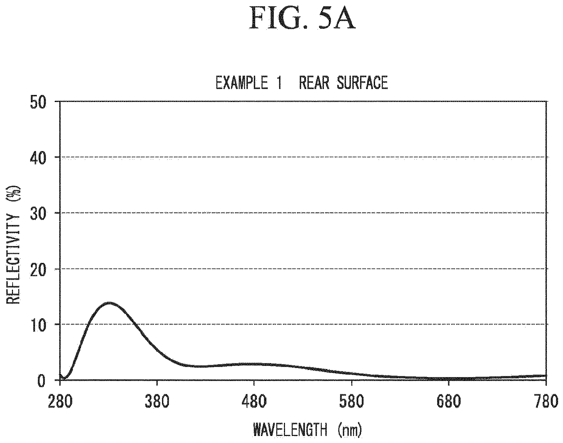

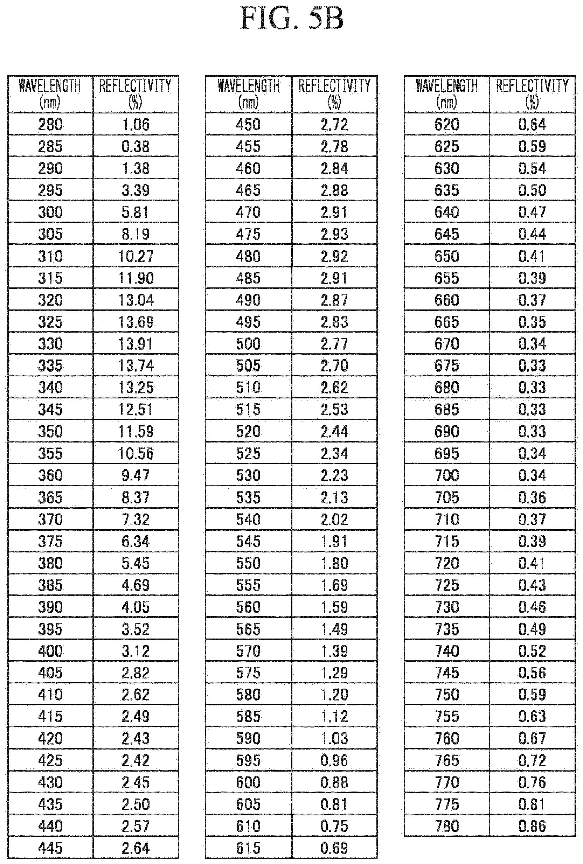

A spectral characteristic of a lens rear surface of Example 1 (not covered by the invention) is shown in FIG. 5A. Numerical data of the spectral characteristic of FIG. 5A is shown in FIG. 5B.

### <Example 2>

Rear Surface (face side): A lens was set in a rotating dome provided in a vacuum chamber, the temperature in the vacuum chamber was adjusted to 70 degrees Celsius by heating, air was exhausted until the pressure was adjusted to 1.0×10⁻³ Pa, and Ar ion beam cleaning was carried out for 60 seconds under conditions of an acceleration voltage of 500 V and an acceleration current of 100 mA. Then, a first layer ZrO₂ (refractive index: 2.00) having an optical film thickness of 0.070λ, a second layer SiO₂ (refractive index: 1.47) having an optical film thickness of 0.065λ, a third layer ZrO₂ (refractive index: 2.00) having an optical film thickness of 0.125λ, a fourth layer SiO₂ (refractive index: 1.47) having an optical film thickness of 0.045λ, a fifth layer Zr02 (refractive index: 2.00) having an optical film thickness of 0.130λ, and a sixth layer SiO₂ (refractive index: 1.47) having an optical film thickness of 0.300λ were sequentially applied from the plastic base side. λ as a center wavelength of design was 500 nm.

Front Surface: The layers described below were applied using the same method as the front surface of Example 1.

Using the same apparatus as in the case of the surface on the face side, and after pretreatment under the same processing atmosphere, a first layer ZrO₂ (refractive index: 2.00) having an optical film thickness of 0.135λ, a second layer SiO₂ (refractive index: 1.47) having an optical film thickness of 0.085λ, a third layer ZrO₂ (refractive index: 2.00) having an optical film thickness of 0.200λ, a fourth layer SiO₂ (refractive index: 1.47) having an optical film thickness of 0.055λ, a fifth layer ZrO₂ (refractive index: 2.00) having an optical film thickness of 0.190λ, and a sixth layer SiO₂ (refractive index: 1.47) having an optical film thickness of 0.345λ were sequentially applied from the plastic base side. λ as a center wavelength of design was 500 nm.

A spectral characteristic of a lens rear surface of Example 2 (not covered by the invention) is shown in FIG. 6A. Numerical data of the spectral characteristic of FIG. 6A is shown in FIG. 6B.

### <Example 3>

Rear Surface (face side): A lens was set in a rotating dome provided in a vacuum chamber, the temperature in the vacuum chamber was adjusted to 70 degrees Celsius by heating, air was exhausted until the pressure was adjusted to 10×10⁻³ Pa, and Ar ion beam cleaning was carried out for 60 seconds under conditions of an acceleration voltage of 500 V and an acceleration current of 100 mA. Then, a first layer ZrO₂ (refractive index: 2.00) having an optical film thickness of 0.060λ, a second layer SiO₂ (refractive index: 1.47) having an optical film thickness of 0.075λ, a third layer ZrO₂ (refractive index: 2.00) having an optical film thickness of 0.360λ, and a fourth layer SiO₂ (refractive index: 1.47) having an optical film thickness of 0.250λ were sequentially applied from the plastic base side. λ as a center wavelength of design was 500 nm.

Front Surface: The same layers as those of the front surface of Example 1 were applied as described below.

Using the same apparatus as in the case of the surface on the face side, and after pretreatment under the same processing atmosphere, a first layer ZrO₂ (refractive index: 2.00) having an optical film thickness of 0.135λ, a second layer SiO₂ (refractive index: 1.47) having an optical film thickness of 0.085λ, a third layer ZrO₂ (refractive index: 2.00) having an optical film thickness of 0.200λ, a fourth layer SiO₂ (refractive index: 1.47) having an optical film thickness of 0.055λ, a fifth layer ZrO₂ (refractive index: 2.00) having an optical film thickness of 0.190λ, and a sixth layer SiO₂ (refractive index: 1.47) having an optical film thickness of 0.345λ were sequentially applied from the plastic base side. λ as a center wavelength of design was 500 nm.

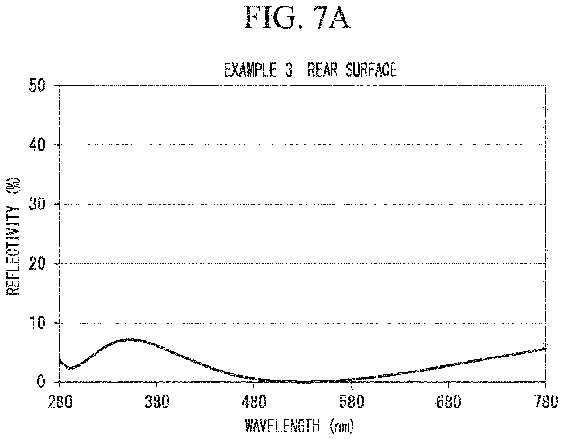

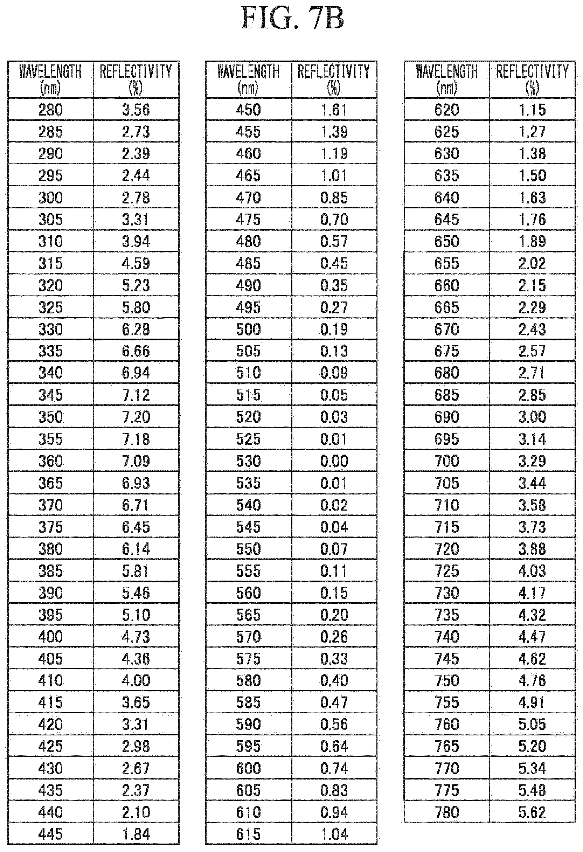

A spectral characteristic of a lens rear surface of Example 3 (not covered by the invention) is shown in FIG. 7A. Numerical data of the spectral characteristic of FIG. 7A is shown in FIG. 7B.

### <Comparative Example 1>

Rear Surface (face side): Using the same apparatus as in the case of Examples, and after pretreatment under the same processing atmosphere, a first layer ZrO₂ (refractive index: 2.00) having an optical film thickness of 0.110λ, a second layer SiO₂ (refractive index: 1.47) having an optical film thickness of 0.090λ, a third layer ZrO₂ (refractive index: 2.00) having an optical film thickness of 0.220λ, a fourth layer SiO₂ (refractive index: 1.47) having an optical film thickness of 0.060λ, a fifth layer ZrO₂ (refractive index: 2.00) having an optical film thickness of 0.200λ, and a sixth layer SiO₂ (refractive index: 1.47) having an optical film thickness of 0.325λ were sequentially applied from the plastic base side. λ as a center wavelength of design was 500 nm.

Front Surface: The same layers as those of the front surface of Example 1 were applied as described below.

Using the same apparatus as in the case of the surface on the face side, and after pretreatment under the same processing atmosphere, a first layer ZrO₂ (refractive index: 2.00) having an optical film thickness of 0.135λ, a second layer Si02 (refractive index: 1.47) having an optical film thickness of 0.085λ, a third layer ZrO₂ (refractive index: 2.00) having an optical film thickness of 0.200λ, a fourth layer Si02 (refractive index: 1.47) having an optical film thickness of 0.055λ, a fifth layer ZrO₂ (refractive index: 2.00) having an optical film thickness of 0.190λ, and a sixth layer SiO₂ (refractive index: 1.47) having an optical film thickness of 0.345λ were sequentially applied from the plastic base side. λ as a center wavelength of design was 500 nm.

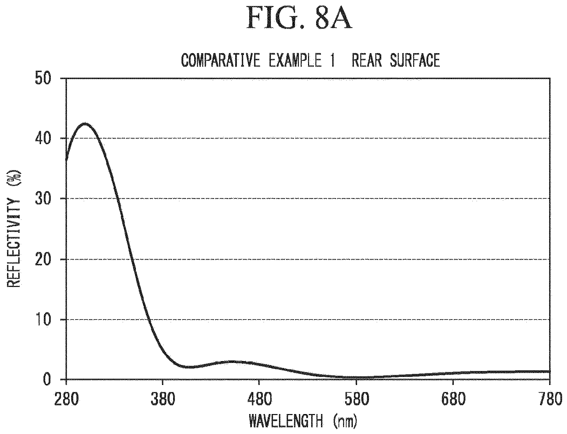

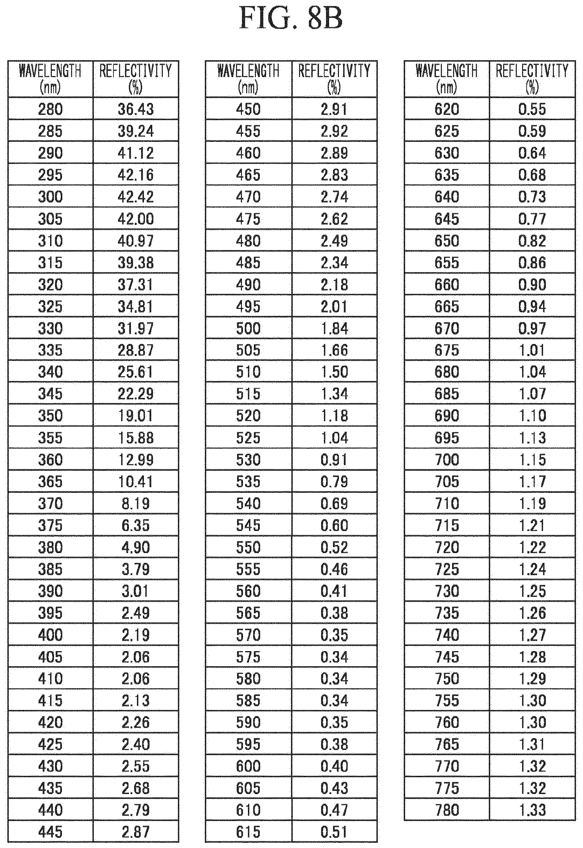

A spectral characteristic of a lens rear surface of Comparative Example 1 is shown in FIG. 8A. Numerical data of the spectral characteristic of FIG. 8A is shown in FIG. 8B.

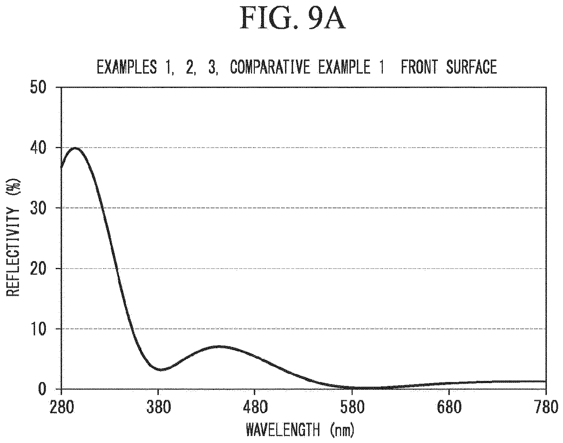

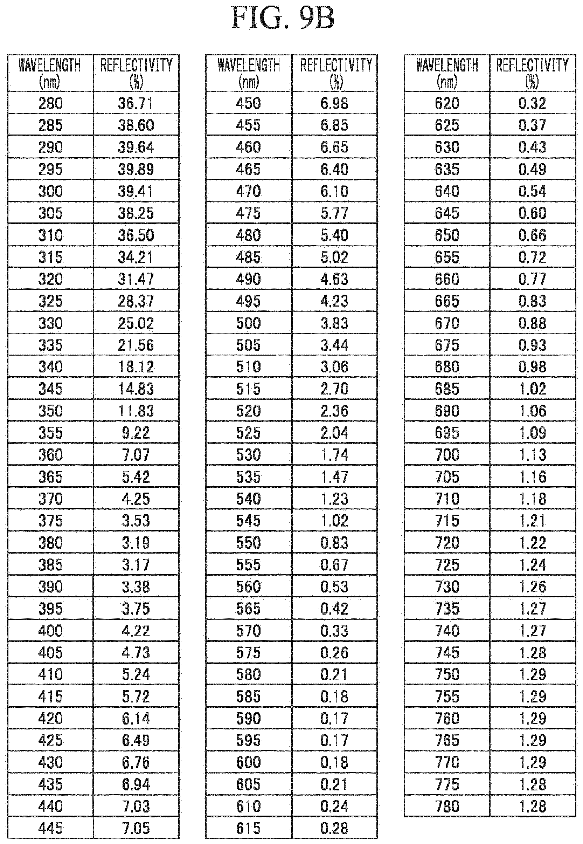

Further, a spectral characteristic of lens front surfaces of Examples 1 to 3 and a lens front surface of Comparative Example 1 is shown in FIG. 9A. Numerical data of the spectral characteristic of FIG. 9A is shown in FIG. 9B.

The formed layers in Examples 1 to 3 and Comparative Example 1 are shown in detail in Table 1. The unit of the reflectivity shown in Table 1 is %.

### [Table 1]

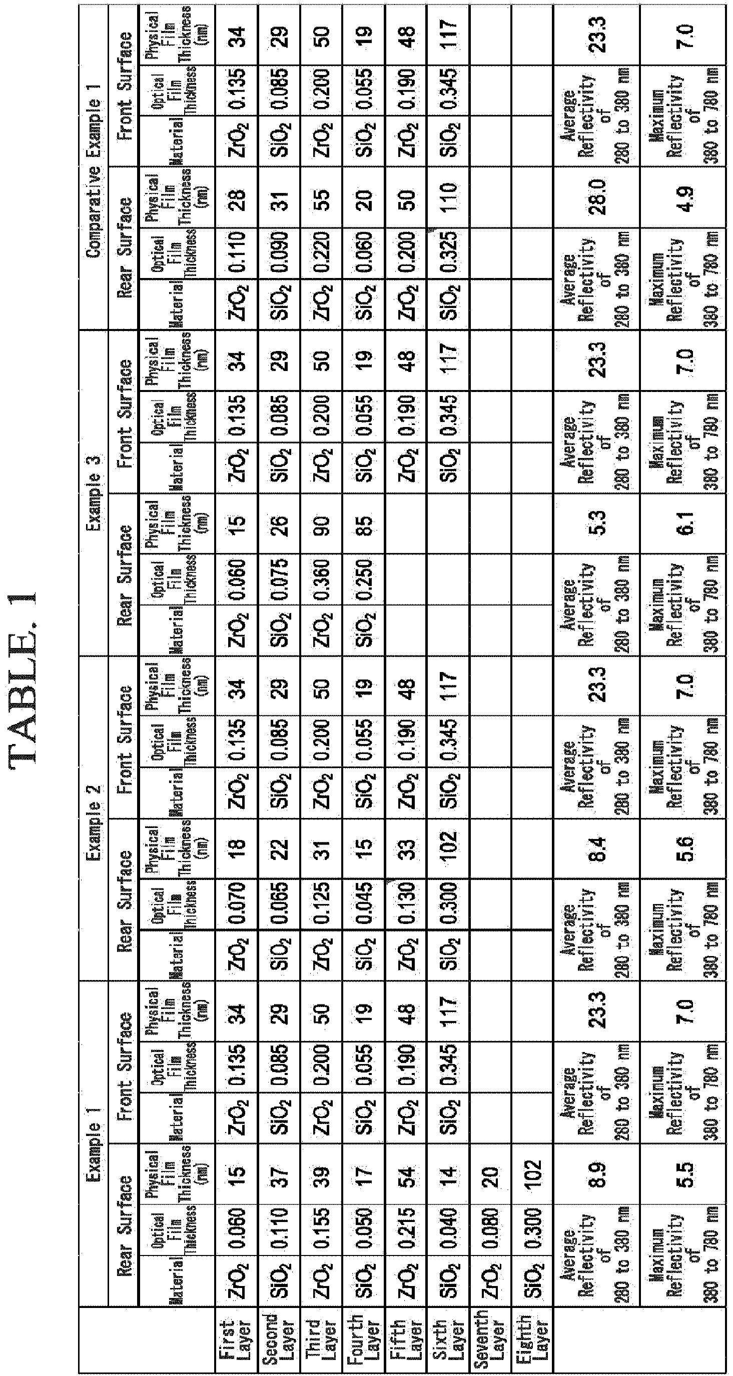

The average reflectivity in the wavelength range of 280 nm to 380 nm of the rear surfaces of the optical components obtained in this manner was compared. As a result, it was confirmed that, as compared to Comparative Example 1, the ultraviolet protection rate of Example 1 was 68%, the ultraviolet protection rate of Example 2 was 70%, and the ultraviolet cutting rate of Example 3 was 81%.

Further, the wearing evaluation was performed using the optical components.

### (Wearing Evaluation)

Glasses with the optical component manufactured in accordance with Examples were worn during PC deskwork to perform comparative evaluation with glasses with the optical component manufactured in accordance with Comparative Example. Conditions in the evaluation and determination items are as follows.
The number of Monitors: 10
Display: 17-Inch Liquid Crystal Display
Working Time: 1 Hour/Day
Wearing Period: 1 Week
Determination Items: 1. Glare, 2. Ease of Viewing Displayed Letters and the like, 3. Feeling of Fatigue

In each of the evaluation items, Examples 1 to 3 were compared to Comparative Example 1, and one that was able to be confirmed to have a similar effect to the Comparative Example 1 was evaluated as "o". The results are shown in Table 2.

### [Table 2]

**TABLE. 2**

| Evaluation item | Glare | | | Ease of Viewing Displayed Letters and the like | | | Feeling of Fatigue | | |
|---|---|---|---|---|---|---|---|---|---|
| Monitor No. | Example 1 | Example 2 | Example 3 | Example 1 | Example 2 | Example 3 | Example 1 | Example 2 | Example 3 |
| 1 | ○ | ○ | ○ | ○ | ○ | | ○ | ○ | ○ |
| 2 | ○ | ○ | ○ | ○ | ○ | ○ | ○ | ○ | |
| 3 | ○ | ○ | | ○ | ○ | ○ | ○ | ○ | ○ |
| 4 | ○ | ○ | ○ | ○ | ○ | | ○ | ○ | ○ |
| 5 | ○ | ○ | ○ | ○ | ○ | ○ | ○ | ○ | ○ |
| 6 | ○ | ○ | ○ | ○ | ○ | ○ | ○ | ○ | ○ |
| 7 | ○ | ○ | ○ | ○ | ○ | ○ | ○ | ○ | ○ |
| 8 | ○ | ○ | ○ | ○ | ○ | ○ | ○ | ○ | ○ |
| 9 | ○ | ○ | ○ | ○ | ○ | ○ | ○ | ○ | ○ |
| 10 | ○ | ○ | | ○ | ○ | ○ | ○ | ○ | |
| Total | 10 | 10 | 8 | 10 | 10 | 8 | 10 | 10 | 8 |

As a result of such comparative wearing evaluation, it was confirmed that there was no difference with respect to visibility and feeling of fatigue between Examples 1 to 3 and Comparative Example 1. By disposing a multilayer film having a maximum reflectivity of 3% to 50% in a wavelength range of 380 nm to 780 nm and having an average reflectivity of 20% or less in a wavelength range of 280 nm to 380 nm on at least a rear surface, it was confirmed that no annoyance due to incident light occurred and visibility was improved, and further it was confirmed that ultraviolet light from the rearward of a person wearing the spectacle lens was also cut by about 70% to about 80%.

### <<Test 2>>

On a urethane-based synthetic resin substrate having a refractive index of 1.67, a multilayer film described below was formed by a vacuum deposition, and the reflection characteristic of the rear surface was measured.

### <Example 4>

A lens was set in a rotating dome provided in a vacuum chamber, the temperature in the vacuum chamber was adjusted to 70 degrees Celsius by heating, air was exhausted until the pressure was adjusted to 1.0×10⁻³ Pa, and Ar ion beam cleaning was carried out for 60 seconds under conditions of an acceleration voltage of 500 V and an acceleration current of 100 mA. Then, a first layer ZrO₂ (refractive index: 2.00) having an optical film thickness of 0.075λ, a second layer SiO₂ (refractive index: 1.47) having an optical film thickness of 0.130λ, a third layer ZrO₂ (refractive index: 2.00) having an optical film thickness of 0.070λ, a fourth layer SiO₂ (refractive index: 1.47) having an optical film thickness of 0.055λ, a fifth layer ZrO₂ (refractive index: 2.00) having an optical film thickness of 0.220λ, a sixth layer SiO₂ (refractive index: 1.47) having an optical film thickness of 0.060λ, a seventh layer ZrO₂ (refractive index: 2.00) having an optical film thickness of 0.120λ, and an eighth layer Si02 (refractive index: 1.47) having an optical film thickness of 0.260λ were sequentially applied from the plastic base side. λ as a center wavelength of design was 500 nm.

A spectral characteristic of a lens rear surface of Example 4 is shown in FIG. 10A. Numerical data of the spectral characteristic of FIG. 10A is shown in FIG. 10B.

### <Example 5>

A lens was set in a rotating dome provided in a vacuum chamber, the temperature in the vacuum chamber was adjusted to 70 degrees Celsius by heating, air was exhausted until the pressure was adjusted to 1.0×10⁻³ Pa, and Ar ion beam cleaning was carried out for 60 seconds under conditions of an acceleration voltage of 500 V and an acceleration current of 100 mA. Then, a first layer ZrO₂ (refractive index: 2.00) having an optical film thickness of 0.110λ, a second layer SiO₂ (refractive index: 1.47) having an optical film thickness of 0.130λ, a third layer ZrO₂ (refractive index: 2.00) having an optical film thickness of 0.065λ, a fourth layer SiO₂ (refractive index: 1.47) having an optical film thickness of 0.055λ, a fifth layer ZrO₂ (refractive index: 2.00) having an optical film thickness of 0.195λ, a sixth layer SiO₂ (refractive index: 1.47) having an optical film thickness of 0.060λ, a seventh layer ZrO₂ (refractive index: 2.00) having an optical film thickness of 0.110λ, and an eighth layer Si02 (refractive index: 1.47) having an optical film thickness of 0.290λ were sequentially applied from the plastic base side. λ as a center wavelength of design was 500 nm.

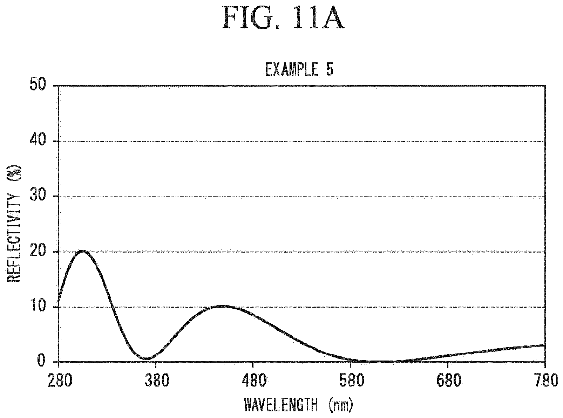

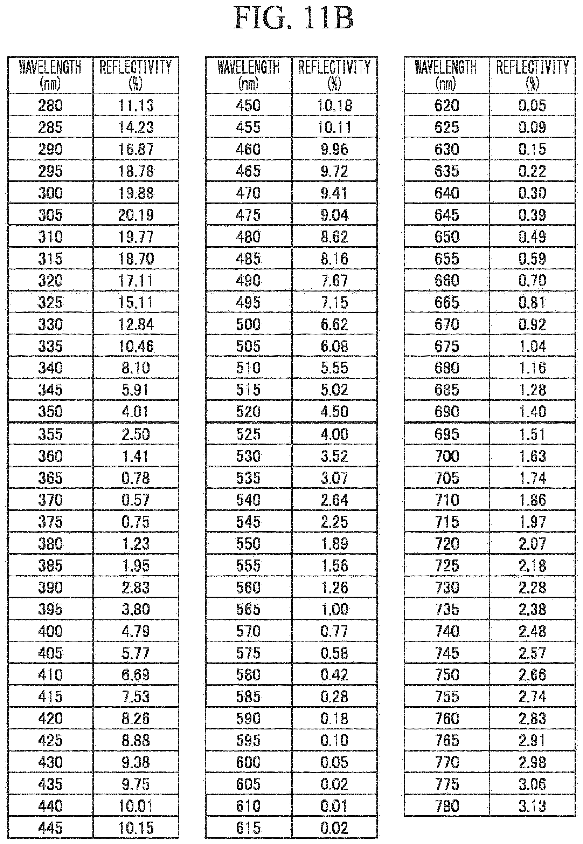

A spectral characteristic of a lens rear surface of Example 5 is shown in FIG. 11A. Numerical data of the spectral characteristic of FIG. 11A is shown in FIG. 11B.

### <Example 6>

A lens was set in a rotating dome provided in a vacuum chamber, the temperature in the vacuum chamber was adjusted to 70 degrees Celsius by heating, air was exhausted until the pressure was adjusted to 1.0×10⁻³ Pa, and Ar ion beam cleaning was carried out for 60 seconds under conditions of an acceleration voltage of 500 V and an acceleration current of 100 mA. Then, a first layer ZrO₂ (refractive index: 2.00) having an optical film thickness of 0.140λ, a second layer SiO₂ (refractive index: 1.47) having an optical film thickness of 0.125λ, a third layer ZrO₂ (refractive index: 2.00) having an optical film thickness of 0.065λ, a fourth layer SiO₂ (refractive index: 1.47) having an optical film thickness of 0.050λ, a fifth layer ZrO₂ (refractive index: 2.00) having an optical film thickness of 0.170λ, a sixth layer SiO₂ (refractive index: 1.47) having an optical film thickness of 0.065λ, a seventh layer ZrO₂ (refractive index: 2.00) having an optical film thickness of 0.090λ, and an eighth layer Si02 (refractive index: 1.47) having an optical film thickness of 0.345λ were sequentially applied from the plastic base side. λ as a center wavelength of design was 500 nm.

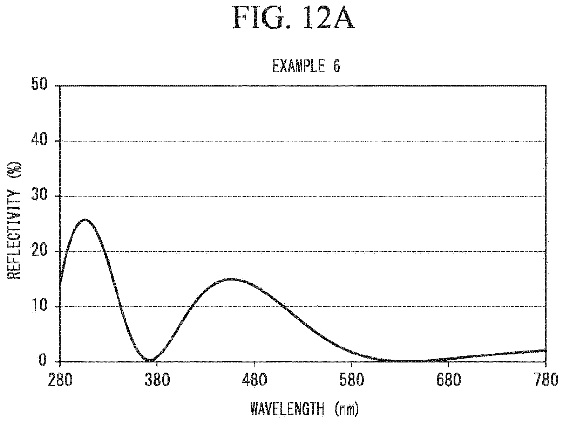

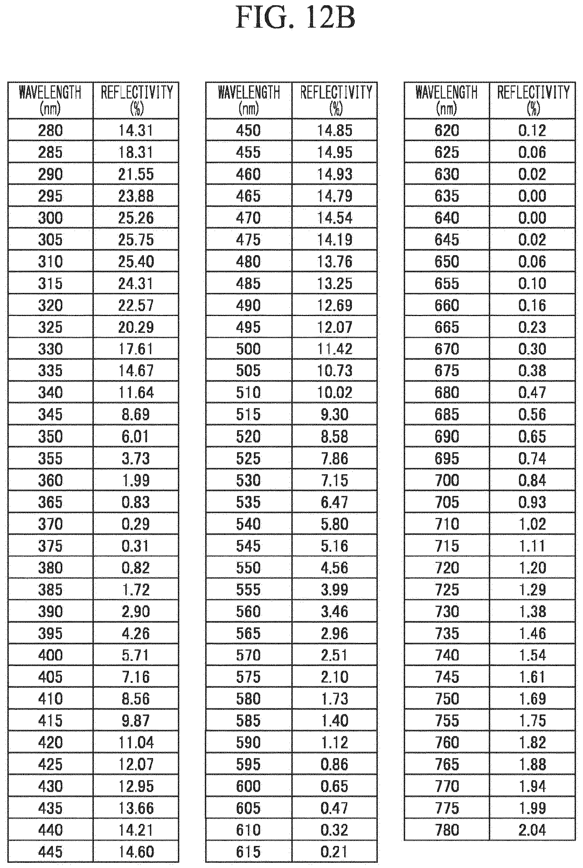

A spectral characteristic of a lens rear surface of Example 6 is shown in FIG. 12A. Numerical data of the spectral characteristic of FIG. 12A is shown in FIG. 12B.

### <Example 7>

A lens was set in a rotating dome provided in a vacuum chamber, the temperature in the vacuum chamber was adjusted to 70 degrees Celsius by heating, air was exhausted until the pressure was adjusted to 1.0×10⁻³ Pa, and Ar ion beam cleaning was carried out for 60 seconds under conditions of an acceleration voltage of 500 V and an acceleration current of 100 mA. Then, a first layer ZrO₂ (refractive index: 2.00) having an optical film thickness of 0.260λ, a second layer SiO₂ (refractive index: 1.47) having an optical film thickness of 0.125λ, a third layer ZrO₂ (refractive index: 2.00) having an optical film thickness of 0.020λ, a fourth layer SiO₂ (refractive index: 1.47) having an optical film thickness of 0.040λ, a fifth layer ZrO₂ (refractive index: 2.00) having an optical film thickness of 0.215λ, a sixth layer SiO₂ (refractive index: 1.47) having an optical film thickness of 0.065λ, a seventh layer ZrO₂ (refractive index: 2.00) having an optical film thickness of 0.045λ, and an eighth layer SiO₂ (refractive index: 1.47) having an optical film thickness of 0.360λ were sequentially applied from the plastic base side. λ as a center wavelength of design was 500 nm.

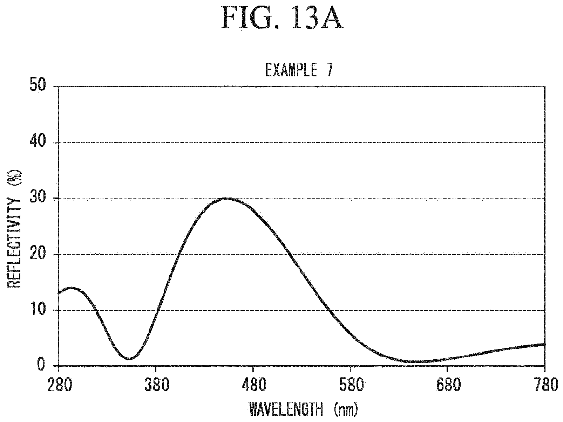

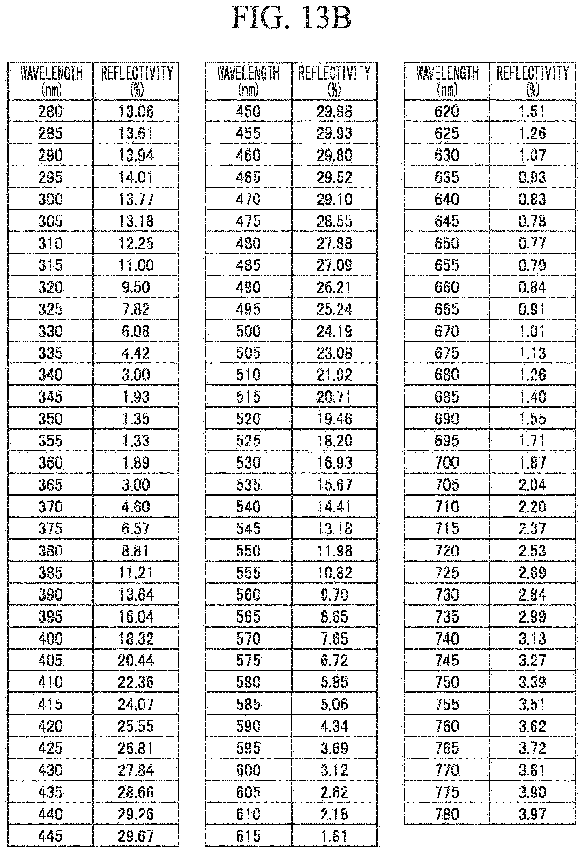

A spectral characteristic of a lens rear surface of Example 7 is shown in FIG. 13A. Numerical data of the spectral characteristic of FIG. 13A is shown in FIG. 13B.

Further, the formed layers in Examples 4 to 7 are shown in detail in Table 3. The unit of the reflectivity shown in Table 3 is %.

### [Table 3]

**TABLE. 3**

| | Example 4 | | | Example 5 | | | Example 6 | | | Example 7 | | |
|---|---|---|---|---|---|---|---|---|---|---|---|---|
| | Rear Surface | | | Rear Surface | | | Rear Surface | | | Rear Surface | | |
| | Material | Optical Film Thickness | Physical Film Thickness (nm) | Material | Optical Film Thickness | Physical Film Thickness (nm) | Material | Optical Film Thickness | Physical Film Thickness (nm) | Material | Optical Film Thickness | Physical Film Thickness (nm) |
| First Layer | ZrO₂ | 0.075 | 19 | ZrO₂ | 0.110 | 28 | ZrO₂ | 0.140 | 35 | ZrO₂ | 0.260 | 65 |
| Second Layer | SiO₂ | 0.130 | 44 | SiO₂ | 0.130 | 44 | SiO₂ | 0.125 | 42 | SiO₂ | 0.125 | 42 |
| Third Layer | ZrO₂ | 0.070 | 18 | ZrO₂ | 0.065 | 16 | ZrO₂ | 0.065 | 16 | ZrO₂ | 0.020 | 5 |
| Fourth Layer | SiO₂ | 0.055 | 19 | SiO₂ | 0.055 | 19 | SiO₂ | 0.050 | 17 | SiO₂ | 0.040 | 14 |
| Fifth Layer | ZrO₂ | 0.220 | 55 | ZrO₂ | 0.195 | 49 | ZrO₂ | 0.170 | 43 | ZrO₂ | 0.215 | 54 |
| Sixth Layer | SiO₂ | 0.060 | 20 | SiO₂ | 0.060 | 20 | SiO₂ | 0.065 | 22 | SiO₂ | 0.065 | 22 |
| Seventh Layer | ZrO₂ | 0.120 | 30 | ZrO₂ | 0.110 | 28 | ZrO₂ | 0.090 | 23 | ZrO₂ | 0.045 | 11 |
| Eighth Layer | SiO₂ | 0.260 | 88 | SiO₂ | 0.290 | 98 | SiO₂ | 0.345 | 117 | SiO₂ | 0.360 | 122 |
| | Average Reflectivity of 280 to 380 nm | | 6.1 | Average Reflectivity of 280 to 380 nm | | 10.7 | Average Reflectivity of 280 to 380 nm | | 14.0 | Average Reflectivity of 280 to 380 nm | | 7.7 |
| | Maximum Reflectivity of 380 to 780 nm | | 7.0 | Maximum Reflectivity of 380 to 780 nm | | 10.2 | Maximum Reflectivity of 380 to 780 nm | | 15.0 | Maximum Reflectivity of 380 to 780 nm | | 29.9 |

As shown in FIGS. 10A to 13B, it was confirmed that the multilayer film having a maximum reflectivity of 3% to 50% in a wavelength range of 380 nm to 780 nm and having an average reflectivity of 20% or less in a wavelength range of 280 nm to 380 nm had a low reflectivity in the ultraviolet region and had a characteristic of reflecting light at a specific wavelength in the visible region.

The above results clearly show that according to the embodiments of the present invention, it is possible to provide an optical component which has an antiglare effect, is excellent in visibility, and, due to the low surface reflection characteristics in the ultraviolet region, is capable of preventing ultraviolet light that is incident from the rearward and is reflected from being incident on the eyeball, and a method of manufacturing the optical component.

### DESCRIPTION OF THE REFERENCE SYMBOLS

- 1, 1':: OPTICAL COMPONENT
- 2:: PLASTIC BASE
- 3, 3':: INORGANIC MULTILAYER FILM
- 4:: FUNCTIONAL THIN FILM
- 5:: PRIMER LAYER (FUNCTIONAL THIN FILM)
- 6:: HARD COATING LAYER (FUNCTIONAL THIN FILM)
- 7, 7':: HIGH REFRACTIVE INDEX LAYER
- 8, 8':: LOW REFRACTIVE INDEX LAYER
- 9, 9':: FIRST LAYER
- 10, 10':: SECOND LAYER
- 11, 11':: THIRD LAYER
- 12:: WATER-AND-OIL REPELLENT FILM
- 30:: DEPOSITION APPARATUS
- 30':: FILM FORMATION APPARATUS
- 31:: FIRST FILM FORMATION CHAMBER
- 32:: SECOND FILM FORMATION CHAMBER
- 33:: THIRD FILM FORMATION CHAMBER
- 34:: HOLDING MEMBER
- 35, 35':: DEPOSITION SOURCE
- 35A:: FIRST DEPOSITION SOURCE
- 35B:: SECOND DEPOSITION SOURCE
- 36:: LIGHT SOURCE DEVICE
- 37:: ION GUN

## Claims

1. A spectacle lens (1) comprising:
a urethane-based plastic base (2) having a refractive index of 1.67; and a multilayer film (3) disposed on a rear surface of both surfaces of the plastic base (2), wherein the multilayer film (3) has a local maximum value of reflectivity at which the reflectivity curve as a function of wavelength has a first derivative of zero, the local maximum value also being the maximum value of reflectivity in a wavelength range of 380 nm to 780 nm, the multilayer film has only one local maximum value of reflectivity at a wavelength at which the reflectivity curve as a function of wavelength has a first derivative of zero and only one local minimum value of reflectivity at a wavelength at which the reflectivity curve as a function of wavelength has a first derivative of zero in a wavelength range of 280 nm to 380 nm, the multilayer film has a maximum reflectivity of 3% to 50% in a wavelength range of 380 nm to 780 nm, and the multilayer film has an average reflectivity of 20% or less in a wavelength range of 280 nm to 380 nm,
wherein the multilayer film (3) is formed of a first layer ZrO₂ having an optical film thickness of 0.075λ, a second layer SiO₂ having an optical film thickness of 0.130λ, a third layer ZrO₂ having an optical film thickness of 0.070λ, a fourth layer SiO₂ having an optical film thickness of 0.055λ, a fifth layer ZrO₂ having an optical film thickness of 0.220λ, a sixth layer SiO₂ having an optical film thickness of 0.060λ, a seventh layer ZrO₂ having an optical film thickness of 0.120λ, and an eighth layer SiO₂ having an optical film thickness of 0.260λ, the first to eighth layers being sequentially applied from a plastic base side, SiO₂ having a refractive index of 1.47, ZrO₂ having a refractive index of 2.00, and λ being 500 nm,
or
wherein the multilayer film (3) is formed of a first layer ZrO₂ having an optical film thickness of 0.110λ, a second layer SiO₂ having an optical film thickness of 0.130λ, a third layer ZrO₂ having an optical film thickness of 0.065λ, a fourth layer SiO₂ having an optical film thickness of 0.055λ, a fifth layer ZrO₂ having an optical film thickness of 0.195λ, a sixth layer SiO₂ having an optical film thickness of 0.060λ, a seventh layer ZrO₂ having an optical film thickness of 0.110λ, and an eighth layer SiO₂ having an optical film thickness of 0.290λ, the first to eighth layers being sequentially applied from a plastic base side, SiO₂ having a refractive index of 1.47, ZrO₂ having a refractive index of 2.00, and λ being 500 nm,
or
wherein the multilayer film (3) is formed of a first layer ZrO₂ having an optical film thickness of 0.140λ, a second layer SiO₂ having an optical film thickness of 0.125λ, a third layer ZrO₂ having an optical film thickness of 0.065λ, a fourth layer SiO₂ having an optical film thickness of 0.050λ, a fifth layer ZrO₂ having an optical film thickness of 0.170λ, a sixth layer SiO₂ having an optical film thickness of 0.065λ, a seventh layer ZrO₂ having an optical film thickness of 0.090λ, and an eighth layer SiO₂ having an optical film thickness of 0.345λ, the first to eighth layers being sequentially applied from a plastic base side, SiO₂ having a refractive index of 1.47, ZrO₂ having a refractive index of 2.00, and λ being 500 nm,
or
wherein the multilayer film (3) is formed of a first layer ZrO₂ having an optical film thickness of 0.260λ, a second layer SiO₂ having an optical film thickness of 0.125λ, a third layer ZrO₂ having an optical film thickness of 0.020λ, a fourth layer SiO₂ having an optical film thickness of 0.040λ, a fifth layer ZrO₂ having an optical film thickness of 0.215λ, a sixth layer SiO₂ having an optical film thickness of 0.065λ, a seventh layer ZrO₂ having an optical film thickness of 0.045λ, and an eighth layer SiO₂ having an optical film thickness of 0.360λ, the first to eighth layers being sequentially applied from a plastic base side, SiO₂ having a refractive index of 1.47, ZrO₂ having a refractive index of 2.00, and λ being 500 nm.

2. The spectacle lens (1) according to claim 1, wherein the plastic base (2) has a function of absorbing ultraviolet light.

3. The spectacle lens (1) according to claim 1 or 2, wherein the plastic base (2) is colored and has a transmissivity of 5% to 85%.

4. The spectacle lens (1) according to any one of claims 1 to 3, further comprising:
a water-and-oil repellent film (12) including a fluorine-substituted alkyl group-containing organosilicon compound on at least one of outermost layers of the multilayer film (3) which is the farthest from the plastic base (2).

5. The spectacle lens (1) according to any one of claims 1 to 4, wherein a functional thin film is provided between the plastic base (2) and the multilayer film (3).

6. The spectacle lens (1) according to any one of claims 1 to 5, wherein a dielectric film or a metallic film having a thickness of 20 nm or less is provided between a high refractive index material and a low refractive index material, the materials constituting the multilayer film (3).

7. A method of manufacturing a spectacle lens (1) according to any one of claims 1 to 6, the spectacle lens (1) being provided with a plastic base (2) and a multilayer film (3) disposed on a rear surface of both surfaces of the plastic base (2), the method comprising:
a step of heating the plastic base (2); and a step of forming the multilayer film (3) on the plastic base (2) by vacuum deposition after adjusting a temperature of the plastic base (2) to a predetermined temperature by the heating, wherein the step of forming the multilayer film (3) has a process of forming a high refractive index layer (7) having a multilayer structure by alternately applying a high refractive index material and a low refractive index material in multilayers and has a process of forming, on the high refractive index layer (7), a low refractive index layer (8) formed by a low refractive index material having a lower refractive index than a refractive index of the high refractive index layer, and comprises
sequentially applying from a plastic base side a first layer ZrO₂ having an optical film thickness of 0.075λ, a second layer SiO₂ having an optical film thickness of 0.130λ, a third layer ZrO₂ having an optical film thickness of 0.070λ, a fourth layer SiO₂ having an optical film thickness of 0.055λ, a fifth layer ZrO₂ having an optical film thickness of 0.220λ, a sixth layer SiO₂ having an optical film thickness of 0.060λ, a seventh layer ZrO₂ having an optical film thickness of 0.120λ, and an eighth layer SiO₂ having an optical film thickness of 0.260λ, SiO₂ having a refractive index of 1.47, ZrO₂ having a refractive index of 2.00, and λ being 500 nm,
or
sequentially applying from a plastic base side a first layer ZrO₂ having an optical film thickness of 0.110λ, a second layer SiO₂ having an optical film thickness of 0.130λ, a third layer ZrO₂ having an optical film thickness of 0.065λ, a fourth layer SiO₂ having an optical film thickness of 0.055λ, a fifth layer ZrO₂ having an optical film thickness of 0.195λ, a sixth layer SiO₂ having an optical film thickness of 0.060λ, a seventh layer ZrO₂ having an optical film thickness of 0.110λ, and an eighth layer SiO₂ having an optical film thickness of 0.290λ, SiO₂ having a refractive index of 1.47, ZrO₂ having a refractive index of 2.00, and λ being 500 nm,
or
sequentially applying from a plastic base side a first layer ZrO₂ having an optical film thickness of 0.140λ, a second layer SiO₂ having an optical film thickness of 0.125λ, a third layer ZrO₂ having an optical film thickness of 0.065λ, a fourth layer SiO₂ having an optical film thickness of 0.050λ, a fifth layer ZrO₂ having an optical film thickness of 0.170λ, a sixth layer SiO₂ having an optical film thickness of 0.065λ, a seventh layer ZrO₂ having an optical film thickness of 0.090λ, and an eighth layer SiO₂ having an optical film thickness of 0.345λ, SiO₂ having a refractive index of 1.47, ZrO₂ having a refractive index of 2.00, and λ being 500 nm,
or
sequentially applying from a plastic base side a first layer ZrO₂ having an optical film thickness of 0.260λ, a second layer SiO₂ having an optical film thickness of 0.125λ, a third layer ZrO₂ having an optical film thickness of 0.020λ, a fourth layer SiO₂ having an optical film thickness of 0.040λ, a fifth layer ZrO₂ having an optical film thickness of 0.215λ, a sixth layer SiO₂ having an optical film thickness of 0.065λ, a seventh layer ZrO₂ having an optical film thickness of 0.045λ, and an eighth layer SiO₂ having an optical film thickness of 0.360λ, SiO₂ having a refractive index of 1.47, ZrO₂ having a refractive index of 2.00, and λ being 500 nm.

8. The method of manufacturing a spectacle lens according to claim 7, wherein the step of forming the multilayer film (3) comprises a step of performing ion beam assisted film formation to form at least one layer of layers which constitute the multilayer film (3).

9. The method of manufacturing a spectacle lens according to claim 8, wherein the ion beam assisting is performed using at least one of gases selected from an inert gas, an oxygen gas, and a mixed gas of an inert gas and an oxygen gas.

10. The method of manufacturing a spectacle lens according to claim 9, wherein the inert gas is argon.

## Patentansprüche

1. Brillenglas (1), aufweisend:
eine auf Urethan basierende Kunststoffbasis (2), die einen Brechungsindex von 1,67 aufweist, und eine mehrlagige Schicht (3), die an einer Rückfläche von beiden Flächen der Kunststoffbasis (2) angeordnet ist, wobei
die mehrlagige Schicht (3) einen lokalen Maximalwert einer Reflektivität aufweist, bei welchem die Reflektivitätskurve als Funktion einer Wellenlänge eine erste Ableitung von Null aufweist, wobei der lokale Maximalwert auch der Maximalwert der Reflektivität in einem Wellenlängenbereich von 380 nm bis 780 nm ist, wobei die mehrlagige Schicht in einem Wellenlängenbereich von 280 nm bis 380 nm nur einen lokalen Maximalwert der Reflektivität bei einer Wellenlänge aufweist, bei welcher die Reflektivitätskurve als Funktion der Wellenlänge eine erste Ableitung von Null aufweist, und nur einen lokalen Minimalwert der Reflektivität bei einer Wellenlänge aufweist, bei welcher die Reflektivitätskurve als Funktion der Wellenlänge eine erste Ableitung von Null aufweist,
wobei die mehrlagige Schicht eine maximale Reflektivität von 3% bis 50% in einem Wellenlängenbereich von 380 nm bis 780 nm aufweist und
die mehrlagige Schicht eine durchschnittliche Reflektivität von 20% oder weniger in einem Wellenlängenbereich von 280 nm bis 380 nm aufweist,
wobei die mehrlagige Schicht (3) gebildet ist aus: einer ersten Lage ZrO₂, die eine optische Schichtdicke von 0,075λ aufweist, einer zweiten Lage SiO₂, die eine optische Schichtdicke von 0,130λ aufweist, einer dritten Lage ZrO₂, die eine optische Schichtdicke von 0,070λ aufweist, einer vierten Lage SiO₂, die eine optische Schichtdicke von 0,055λ aufweist, einer fünften Lage ZrO₂, die eine optische Schichtdicke von 0,220λ aufweist, einer sechsten Lage SiO₂, die eine optische Schichtdicke von 0,060λ aufweist, einer siebten Lage ZrO₂, die eine optische Schichtdicke von 0,120λ aufweist, und einer achten Lage SiO₂, die eine optische Schichtdicke von 0,260λ aufweist, wobei die erste bis achte Schicht sequentiell von einer Seite der Kunststoffbasis aufgetragen sind, SiO₂ einen Brechungsindex von 1,47 aufweist, ZrO₂ einen Brechungsindex von 2,00 aufweist und λ 500 nm beträgt,
oder
wobei die mehrlagige Schicht (3) gebildet ist aus: einer ersten Lage ZrO₂, die eine optische Schichtdicke von 0,110λ aufweist, einer zweiten Lage SiO₂, die eine optische Schichtdicke von 0,130λ aufweist, einer dritten Lage ZrO₂, die eine optische Schichtdicke von 0,065λ aufweist, einer vierten Lage SiO₂, die eine optische Schichtdicke von 0,055λ aufweist, einer fünften Lage ZrO₂, die eine optische Schichtdicke von 0,195λ aufweist, einer sechsten Lage SiO₂, die eine optische Schichtdicke von 0,060λ aufweist, einer siebten Lage ZrO₂, die eine optische Schichtdicke von 0,110λ aufweist, und einer achten Lage SiO₂, die eine optische Schichtdicke von 0,290λ aufweist, wobei die erste bis achte Schicht sequentiell von einer Seite der Kunststoffbasis aufgetragen sind, SiO₂ einen Brechungsindex von 1,47 aufweist, ZrO₂ einen Brechungsindex von 2,00 aufweist und λ 500 nm beträgt,
oder
wobei die mehrlagige Schicht (3) gebildet ist aus: einer ersten Lage ZrO₂, die eine optische Schichtdicke von 0,140λ aufweist, einer zweiten Lage SiO₂, die eine optische Schichtdicke von 0,125λ aufweist, einer dritten Lage ZrO₂, die eine optische Schichtdicke von 0,065λ aufweist, einer vierten Lage SiO₂, die eine optische Schichtdicke von 0,050λ aufweist, einer fünften Lage ZrO₂, die eine optische Schichtdicke von 0,170λ aufweist, einer sechsten Lage SiO₂, die eine optische Schichtdicke von 0,065λ aufweist, einer siebten Lage ZrO₂, die eine optische Schichtdicke von 0,090λ aufweist, und einer achten Lage SiO₂, die eine optische Schichtdicke von 0,345λ aufweist, wobei die erste bis achte Schicht sequentiell von einer Seite der Kunststoffbasis aufgetragen sind, SiO₂ einen Brechungsindex von 1,47 aufweist, ZrO₂ einen Brechungsindex von 2,00 aufweist und λ 500 nm beträgt,
oder
wobei die mehrlagige Schicht (3) gebildet ist aus: einer ersten Lage ZrO₂, die eine optische Schichtdicke von 0,260λ aufweist, einer zweiten Lage SiO₂, die eine optische Schichtdicke von 0,125λ aufweist, einer dritten Lage ZrO₂, die eine optische Schichtdicke von 0,020λ aufweist, einer vierten Lage SiO₂, die eine optische Schichtdicke von 0,040λ aufweist, einer fünften Lage ZrO₂, die eine optische Schichtdicke von 0,215λ aufweist, einer sechsten Lage SiO₂, die eine optische Schichtdicke von 0,065λ aufweist, einer siebten Lage ZrO₂, die eine optische Schichtdicke von 0,045λ aufweist, und einer achten Lage SiO₂, die eine optische Schichtdicke von 0,360λ aufweist, wobei die erste bis achte Schicht sequentiell von einer Seite der Kunststoffbasis aufgetragen sind, SiO₂ einen Brechungsindex von 1,47 aufweist, ZrO₂ einen Brechungsindex von 2,00 aufweist und λ 500 nm beträgt.

2. Brillenglas (1), nach Anspruch 1,
wobei die Kunststoffbasis (2) eine Funktion zum Absorbieren von ultraviolettem Licht hat.

3. Brillenglas (1) nach Anspruch 1 oder 2,
wobei die Kunststoffbasis (2) gefärbt ist und eine Transmissivität von 5% bis 85% aufweist.

4. Brillenglas (1) nach einem der Ansprüche 1 bis 3, ferner aufweisend:
eine wasser- und ölabweisende Schicht (12), die eine eine fluorsubstituierte Alkylgruppe enthaltende Organosiliziumverbindung aufweist, an wenigstens einer von äußersten Lagen der mehrlagigen Schicht (3), die am weitesten weg von der Kunststoffbasis (2) entfernt ist.

5. Brillenglas (1) nach einem der Ansprüche 1 bis 4, wobei eine funktionale dünne Schicht zwischen der Kunststoffbasis (2) und der mehrlagigen Schicht (3) bereitgestellt ist.

6. Brillenglas (1) nach einem der Ansprüche 1 bis 5, wobei eine dielektrische Schicht oder eine metallische Schicht, die eine Dicke von 20 nm oder weniger aufweist, zwischen einem Material mit hohem Brechungsindex und einem Material mit niedrigem Brechungsindex bereitgestellt ist, wobei die Materialien die mehrlagige Schicht (3) bilden.

7. Verfahren zum Herstellen eines Brillenglases (1) nach einem der Ansprüche 1 bis 6, wobei das Brillenglas (1) bereitgestellt ist mit einer Kunststoffbasis (2) und einer mehrlagigen Schicht (3), die an einer Rückfläche von beiden Flächen der Kunststoffbasis (2) angeordnet ist, wobei das Verfahren aufweist:
einen Schritt zum Aufwärmen der Kunststoffbasis (2) und einen Schritt zum Bilden der mehrlagigen Schicht (3) an der Kunststoffbasis (2) durch Vakuumabscheiden nach einem Einstellen einer Temperatur der Kunststoffbasis (2) auf eine vorgegebene Temperatur durch das Aufwärmen, wobei
der Schritt zum Bilden der mehrlagigen Schicht (3) einen Prozess aufweist zum Bilden einer Hochbrechungsindexlage (7), die eine mehrlagige Struktur aufweist, durch alternierendes Auftragen eines Materials mit hohem Brechungsindex und eines Materials mit niedrigem Brechungsindex in mehreren Lagen und einen Prozess aufweist zum Bilden an der Hochbrechungsindexlage (7) einer Niedrigbrechungsindexlage (8), die durch ein Material mit geringem Brechungsindex gebildet ist, das einen Brechungsindex aufweist, der geringer als ein Brechungsindex der Hochbrechungsindexlage ist, und aufweist:
sequentielles Auftragen von einer Seite der Kunststoffbasis einer ersten Lage ZrO₂, die eine optische Schichtdicke von 0,075λ aufweist, einer zweiten Lage SiO₂, die eine optische Schichtdicke von 0,130λ aufweist, einer dritten Lage ZrO₂, die eine optische Schichtdicke von 0,070λ aufweist, einer vierten Lage SiO₂, die eine optische Schichtdicke von 0,055λ aufweist, einer fünften Lage ZrO₂, die eine optische Schichtdicke von 0,220λ aufweist, einer sechsten Lage SiO₂, die eine optische Schichtdicke von 0,060λ aufweist, einer siebten Lage ZrO₂, die eine optische Schichtdicke von 0,120λ aufweist, und einer achten Lage SiO₂, die eine optische Schichtdicke von 0,260λ aufweist, wobei SiO₂ einen Brechungsindex von 1,47 aufweist, ZrO₂ einen Brechungsindex von 2,00 aufweist und λ 500 nm beträgt,
oder
sequentielles Auftragen von einer Seite der Kunststoffbasis einer ersten Lage ZrO₂, die eine optische Schichtdicke von 0,110λ aufweist, einer zweiten Lage SiO₂, die eine optische Schichtdicke von 0,130λ aufweist, einer dritten Lage ZrO₂, die eine optische Schichtdicke von 0,065λ aufweist, einer vierten Lage SiO₂, die eine optische Schichtdicke von 0,055λ aufweist, einer fünften Lage ZrO₂, die eine optische Schichtdicke von 0,195λ aufweist, einer sechsten Lage SiO₂, die eine optische Schichtdicke von 0,060λ aufweist, einer siebten Lage ZrO₂, die eine optische Schichtdicke von 0,110λ aufweist, und einer achten Lage SiO₂, die eine optische Schichtdicke von 0,290λ aufweist, wobei SiO₂ einen Brechungsindex von 1,47 aufweist, ZrO₂ einen Brechungsindex von 2,00 aufweist und λ 500 nm beträgt,
oder
sequentielles Auftragen von einer Seite der Kunststoffbasis einer ersten Lage ZrO₂, die eine optische Schichtdicke von 0,140λ aufweist, einer zweiten Lage SiO₂, die eine optische Schichtdicke von 0,125λ aufweist, einer dritten Lage ZrO₂, die eine optische Schichtdicke von 0,065λ aufweist, einer vierten Lage SiO₂, die eine optische Schichtdicke von 0,050λ aufweist, einer fünften Lage ZrO₂, die eine optische Schichtdicke von 0,170λ aufweist, einer sechsten Lage SiO₂, die eine optische Schichtdicke von 0,065λ aufweist, einer siebten Lage ZrO₂, die eine optische Schichtdicke von 0,090λ aufweist, und einer achten Lage SiO₂, die eine optische Schichtdicke von 0,345λ aufweist, wobei SiO₂ einen Brechungsindex von 1,47 aufweist, ZrO₂ einen Brechungsindex von 2,00 aufweist und λ 500 nm beträgt,
oder
sequentielles Auftragen von einer Seite der Kunststoffbasis einer ersten Lage ZrO₂, die eine optische Schichtdicke von 0,260λ aufweist, einer zweiten Lage SiO₂, die eine optische Schichtdicke von 0,125λ aufweist, einer dritten Lage ZrO₂, die eine optische Schichtdicke von 0,020λ aufweist, einer vierten Lage SiO₂, die eine optische Schichtdicke von 0,040λ aufweist, einer fünften Lage ZrO₂, die eine optische Schichtdicke von 0,215λ aufweist, einer sechsten Lage SiO₂, die eine optische Schichtdicke von 0,065λ aufweist, einer siebten Lage ZrO₂, die eine optische Schichtdicke von 0,045λ aufweist, und einer achten Lage SiO₂, die eine optische Schichtdicke von 0,360λ aufweist, wobei SiO₂ einen Brechungsindex von 1,47 aufweist, ZrO₂ einen Brechungsindex von 2,00 aufweist und λ 500 nm beträgt

8. Verfahren zum Herstellen eines Brillenglases nach Anspruch 7, wobei der Schritt zum Bilden der mehrlagigen Schicht (3) einen Schritt zum Durchführen einer ionenstrahlunterstützten Schichtbildung aufweist, um wenigstens eine Lage von Lagen zu bilden, die die mehrlagige Schicht (3) bilden.

9. Verfahren zum Herstellen eines Brillenglases nach Anspruch 8, wobei das lonenstrahlunterstützen durchgeführt wird unter Verwendung wenigstens eines Gases, das ausgewählt ist aus einem inerten Gas, einem Sauerstoffgas und einem Mischgas aus einem inerten Gas und einem Sauerstoffgas.

10. Verfahren zum Herstellen eines Brillenglases nach Anspruch 9, wobei das inerte Gas Argon ist.

## Revendications

1. Verres de lunettes (1) comprenant :
une base en plastique à base d'uréthane (2) ayant un indice de réfraction de 1,67 ; et un film multicouches (3) disposé sur une surface arrière des deux surfaces de la base en plastique (2), dans lesquels
le film multicouches (3) possède une valeur maximale locale de réflectivité à laquelle la courbe de réflectivité, en fonction de la longueur d'onde, présente une première dérivée de zéro, la valeur maximale locale étant également la valeur maximale de réflectivité sur une plage de longueurs d'onde de 380 nm à 780 nm,
le film multicouches possède une seule valeur maximale locale de réflectivité à une longueur d'onde à laquelle la courbe de réflectivité, en fonction de la longueur d'onde, présente une première dérivée de zéro, et une seule valeur minimale locale de réflectivité à une longueur d'onde à laquelle la courbe de réflectivité, en fonction de la longueur d'onde, présente une première dérivée de zéro sur une plage de longueurs d'onde de 280 nm à 380 nm,
le film multicouches possède une réflectivité maximale de 3% à 50% sur la plage de longueurs d'onde de 380 nm à 780 nm, et
le film multicouches possède une réflectivité moyenne de 20% ou moins sur une plage de longueurs d'onde de 280 nm à 380 nm,
dans lesquels le film multicouches (3) est formé d'une première couche de ZrOz ayant une épaisseur de film optique de 0,075 λ, une deuxième couche de SiOz ayant une épaisseur de film optique de 0,130 λ, une troisième couche de ZrOz ayant une épaisseur de film optique de 0,070 λ, une quatrième couche de SiOz ayant une épaisseur de film optique de 0,055 λ, une cinquième couche de ZrOz ayant une épaisseur de film optique de 0,220 λ, une sixième couche de SiOz ayant une épaisseur de film optique de 0,060 λ, une septième couche de ZrOz ayant une épaisseur de film optique de 0,120 λ, et une huitième couche de SiOz ayant une épaisseur de film optique de 0,260 λ, les première à huitième couches étant appliquées séquentiellement à partir d'un côté de base en plastique, SiOz ayant un indice de réfraction de 1,47, ZrOz ayant un indice de réfraction de 2,00, et λ étant de 500 nm,
ou
dans lesquels le film multicouches (3) est formé d'une première couche de ZrOz ayant une épaisseur de film optique de 0,110 λ, une deuxième couche de SiOz ayant une épaisseur de film optique de 0,130 λ, une troisième couche de ZrOz ayant une épaisseur de film optique de 0,065 λ, une quatrième couche de SiOz ayant une épaisseur de film optique de 0,055 λ, une cinquième couche de ZrOz ayant une épaisseur de film optique de 0,195 λ, une sixième couche de SiOz ayant une épaisseur de film optique de 0,060 λ, une septième couche de ZrOz ayant une épaisseur de film optique de 0,110 λ, et une huitième couche de SiOz ayant une épaisseur de film optique de 0,290 λ, les première à huitième couches étant appliquées séquentiellement à partir d'un côté de base en plastique, SiOz ayant un indice de réfraction de 1,47, ZrOz ayant un indice de réfraction de 2,00, et λ étant de 500 nm,
ou
dans lesquels le film multicouches (3) est formé d'une première couche de ZrOz ayant une épaisseur de film optique de 0,140 λ, une deuxième couche de SiOz ayant une épaisseur de film optique de 0,125 λ, une troisième couche de ZrOz ayant une épaisseur de film optique de 0,065 λ, une quatrième couche de SiOz ayant une épaisseur de film optique de 0,050 λ, une cinquième couche de ZrOz ayant une épaisseur de film optique de 0,170 λ, une sixième couche de SiOz ayant une épaisseur de film optique de 0,065 λ, une septième couche de ZrOz ayant une épaisseur de film optique de 0,090 λ, et une huitième couche de SiOz ayant une épaisseur de film optique de 0,345 λ, les première à huitième couches étant appliquées séquentiellement à partir d'un côté de base en plastique, SiOz ayant un indice de réfraction de 1,47, ZrOz ayant un indice de réfraction de 2,00, et λ étant de 500 nm,
ou
dans lesquels le film multicouches (3) est formé d'une première couche de ZrOz ayant une épaisseur de film optique de 0,260 λ, une deuxième couche de SiOz ayant une épaisseur de film optique de 0,125 λ, une troisième couche de ZrOz ayant une épaisseur de film optique de 0,020 λ, un quatrième couche de SiOz ayant une épaisseur de film optique de 0,040 λ, une cinquième couche de ZrOz ayant une épaisseur de film optique de 0,215 λ, une sixième couche de SiOz ayant une épaisseur de film optique de 0,065 λ, une septième couche de ZrOz ayant une épaisseur de film optique de 0,045 λ, et une huitième couche de SiOz ayant une épaisseur de film optique de 0,360 λ, les première à huitième couches étant appliquées séquentiellement à partir d'un côté de base en plastique, SiOz ayant un indice de réfraction de 1,47, ZrOz ayant un indice de réfraction de 2,00, et λ étant de 500 nm.

2. Verres de lunettes (1) selon la revendication 1, dans lesquels la base en plastique (2) possède une fonction d'absorption de la lumière ultraviolette.

3. Verres de lunettes (1) selon la revendication 1 ou 2, dans lesquels la base en plastique (2) est colorée et présente une transmissivité de 5% à 85%.

4. Verres de lunettes (1) selon l'une quelconque des revendications 1 à 3, comprenant en outre :
un film résistant à l'eau et à l'huile (12) comprenant un composé organosilicié contenant un groupe alkyle à substitution de fluor sur au moins l'une des couches externes du film multicouches (3) qui est la plus éloignée de la base en plastique (2).

5. Verres de lunettes (1) selon l'une quelconque des revendications 1 à 4, dans lesquels un film mince fonctionnel est prévu entre la base en plastique (2) et le film multicouches (3).

6. Verres de lunettes (1) selon l'une quelconque des revendications 1 à 5, dans lesquels un film diélectrique ou un film métallique ayant une épaisseur de 20 nm ou moins est prévu entre un matériau à indice de réfraction élevé et un matériau à indice de réfraction faible, les matériaux constituant le film multicouches (3).

7. Procédé de fabrication de verres de lunettes (1) selon l'une quelconque des revendications 1 à 6, les verres de lunettes (1) étant munis d'une base en plastique (2) et d'un film multicouches (3) disposé sur une surface arrière des deux surfaces de la base en plastique (2), le procédé comprenant :
une étape de chauffage de la base en plastique (2) ; et une étape de formation du film multicouches (3) sur la base en plastique (2) par dépôt sous vide après l'ajustement d'une température de la base en plastique (2) à une température prédéterminée par le chauffage, dans lequel
l'étape de formation du film multicouches (3) possède un processus de formation d'une couche à indice de réfraction élevé (7) ayant une structure multicouches en appliquant de manière alternée un matériau à indice de réfraction élevé et un matériau à indice de réfraction faible en plusieurs couches, et possède un processus de formation, sur la couche à indice de réfraction élevé (7), d'une couche à indice de réfraction faible (8) formée par un matériau à indice de réfraction faible ayant une indice de réfraction inférieur à un indice de réfraction de la couche à indice de réfraction élevé, et comprend
l'application séquentielle à partir d'un côté de base en plastique d'une première couche de ZrOz ayant une épaisseur de film optique de 0,075 λ, une deuxième couche de SiOz ayant une épaisseur de film optique de 0,130 λ, une troisième couche de ZrOz ayant une épaisseur de film optique de 0,070 λ, une quatrième couche de SiOz ayant une épaisseur de film optique de 0,055 λ, une cinquième couche de ZrOz ayant une épaisseur de film optique de 0,220 λ, une sixième couche de SiOz ayant une épaisseur de film optique de 0,060 λ, une septième couche de ZrOz ayant une épaisseur de film optique de 0,120 λ, et une huitième couche de SiOz ayant une épaisseur de film optique de 0,260 λ, SiOz ayant un indice de réfraction de 1,47, ZrOz ayant un indice de réfraction de 2,00, et λ étant de 500 nm,
ou
l'application séquentielle à partir d'un côté de base en plastique d'une première couche de ZrOz ayant une épaisseur de film optique de 0,110 λ, une deuxième couche de SiOz ayant une épaisseur de film optique de 0,130 λ, une troisième couche de ZrOz ayant une épaisseur de film optique de 0,065 λ, une quatrième couche de SiOz ayant une épaisseur de film optique de 0,055 λ, une cinquième couche de ZrOz ayant une épaisseur de film optique de 0,195 λ, une sixième couche de SiOz ayant une épaisseur de film optique de 0,060 λ, une septième couche de ZrOz ayant une épaisseur de film optique de 0,110 λ, et une huitième couche de SiOz ayant une épaisseur de film optique de 0,290 λ, SiOz ayant un indice de réfraction de 1,47, ZrOz ayant un indice de réfraction de 2,00, et λ étant de 500 nm,
ou
l'application séquentielle à partir d'un côté de base en plastique d'une première couche de ZrOz ayant une épaisseur de film optique de 0,140 λ, une deuxième couche de SiOz ayant une épaisseur de film optique de 0,125 λ, une troisième couche de ZrOz ayant une épaisseur de film optique de 0,065 λ, une quatrième couche de SiOz ayant une épaisseur de film optique de 0,050 λ, une cinquième couche de ZrOz ayant une épaisseur de film optique de 0,170 λ, une sixième couche de SiOz ayant une épaisseur de film optique de 0,065 λ, une septième couche de ZrOz ayant une épaisseur de film optique de 0,090 λ, et une huitième couche de SiOz ayant une épaisseur de film optique de 0,345 λ, SiOz ayant un indice de réfraction de 1,47, ZrOz ayant un indice de réfraction de 2,00, et λ étant de 500 nm,
ou
l'application séquentielle à partir d'un côté de base en plastique d'une première couche de ZrOz ayant une épaisseur de film optique de 0,260 λ, une deuxième couche de SiOz ayant une épaisseur de film optique de 0,125 λ, une troisième couche de ZrOz ayant une épaisseur de film optique de 0,020 λ, une quatrième couche de SiOz ayant une épaisseur de film optique de 0,040 λ, une cinquième couche de ZrOz ayant une épaisseur de film optique de 0,215 λ, une sixième couche de SiOz ayant une épaisseur de film optique de 0,065 λ, une septième couche de ZrOz ayant une épaisseur de film optique de 0,045 λ, et une huitième couche de SiOz ayant une épaisseur de film optique de 0,360 λ, SiOz ayant un indice de réfraction de 1,47, ZrOz ayant un indice de réfraction de 2,00, et λ étant de 500 nm.

8. Procédé de fabrication de verres de lunettes selon la revendication 7, dans lequel l'étape de formation du film multicouches (3) comprend une étape de réalisation d'une formation de film à assistance par faisceau d'ions afin de former au moins une couche des couches qui constituent le film multicouches (3).

9. Procédé de fabrication de verres de lunettes selon la revendication 8, dans lequel l'assistance par faisceau d'ions est effectuée à l'aide d'au moins l'un de gaz choisis parmi un gaz inerte, de l'oxygène, et un mélange gazeux d'un gaz inerte et d'oxygène.

10. Procédé de fabrication de verres de lunettes selon la revendication 9, dans lequel le gaz inerte est de l'argon.
